Europäisches Patentamt

European Patent Office

Office européen des brevets

(19)

(11) Numéro de publication : **0 154 568**
**B1**

(12) **FASCICULE DE BREVET EUROPÉEN**

(45) Date de publication du fascicule du brevet :
07.09.88

(51) Int. Cl.⁴ : **G 01 C   1/06**

(21) Numéro de dépôt : **85400053.6**

(22) Date de dépôt : **11.01.85**

(54) **Codeur angulaire pour le codage d'angle zénithal entre une direction déterminée variable et la verticale, en particulier pour théodolite.**

(30) Priorité : **01.02.84 FR 8401543**

(43) Date de publication de la demande :
**11.09.85 Bulletin 85/37**

(45) Mention de la délivrance du brevet :
**07.09.88 Bulletin 88/36**

(84) Etats contractants désignés :
**CH DE FR GB LI SE**

(56) Documents cités :
**DE-A- 2 152 749**
**DE-B- 2 653 275**

(73) Titulaire : **SOCIETE D'ETUDES RECHERCHES ET CONSTRUCTIONS ELECTRONIQUES SERCEL**
**6, rue de Bel-Air**
**F-44470 Carquefou (FR)**

(72) Inventeur : **Hullein, François Marie Louis**
**31, rue François Bruneau**
**F-44000 Nantes (FR)**
Inventeur : **Bodin, Jacques**
**25, rue le Corleveau**
**F-44120 Vertou (FR)**

(74) Mandataire : **Martin, Jean-Jacques et al**
**Cabinet REGIMBEAU 26, Avenue Kléber**
**F-75116 Paris (FR)**

EP 0 154 568 B1

## Description

La présente invention concerne un codeur d'angle zénithal variable destiné à être utilisé en particulier dans un théodolite pour la réalisation de relevés topographiques.

Plus précisément, la présente invention concerne un codeur angulaire pour le codage d'angle zénithal entre une direction déterminée variable et la verticale, du type comprenant :

— un disque qui comporte au moins une série de marques réparties sur une piste circulaire centrée sur un axe de référence horizontal,

— au moins un équipage détecteur optique susceptible d'un pivotement autour d'un axe coaxial à l'axe de référence du disque, ledit équipage détecteur optique représentant la verticale, par rapport à l'axe de pivotement, l'équipage détecteur comportant des moyens émetteurs et des moyens récepteurs optiques associés, placés en regard de ladite piste pour détecter les marques présentes devant celui-ci, et,

— des moyens de mesure qui sont sensibles à la détection des marques par l'équipage.

De préférence, deux équipages détecteurs optiques susceptibles d'un pivotement relatif autour d'un axe coaxial à l'axe de référence du disque, sont prévus. Les premier et second équipages détecteurs optiques représentent respectivement, par rapport à l'axe de pivotement relatif, ladite direction déterminée et la verticale. Les moyens de mesure sont alors sensibles à la détection des marques par chacun des équipages pour déterminer le décalage angulaire entre ceux-ci.

Par ailleurs, de préférence, le disque est entraîné en rotation autour de l'axe de référence et les marques sont des marques radiales angulairement espacées par rapport à cet axe de référence.

De tels codeurs angulaires sont décrits en particulier dans les demandes de brevet en France au nom de la Demanderesse publiées sous les numéros 2 270 722, 2 304 224 et 2 406 804.

On rappellera que effectuer un relevé topographique revient à déterminer les coordonnées polaires d'un point observé, dans un système orthonormé possédant deux axes situés dans un plan horizontal et un troisième axe confondu avec la verticale ou zénith, l'origine du système coïncidant avec le point d'observation.

Pour cela, les équipements utilisés pour la réalisation de relevés topographiques, d'une façon générale, comprennent une lunette de visée dirigée vers le point observé et déterminant un axe de visée passant par le point d'observation et le point observé, combinée avec un télémètre ou distancemètre adapté pour mesurer la distance séparant le point d'observation du point observé, et un théodolite. Ce dernier est adapté pour mesurer d'une part l'azimuth du point observé, c'est-à-dire l'angle formé par la projection dans un plan horizontal de l'axe de visée par rapport à un axe de référence horizontal, par exemple le nord magnétique, et d'autre part l'angle zénithal, c'est-à-dire l'angle formé par l'axe de visée et le zénith.

Plus précisément, le théodolite comprend un codeur angulaire horizontal adapté pour mesurer l'azimuth et un codeur angulaire vertical adapté pour mesurer l'angle zénithal.

Ces codeurs angulaires sont disposés dans l'alidade, ou partie mobile du théodolite qui porte la lunette de visée.

Pour permettre la mesure, l'alidade est mise à niveau dans deux directions, à l'aide par exemple de trois vis, et avec contrôle grâce à des instruments servant à vérifier l'horizontalité d'un plan de référence de l'alidade.

La sensibilité de ces instruments dits généralement « nivelle d'alidade » est de l'ordre de 10 mgr soit $15{,}7 \cdot 10^{-5}$ rd ce qui est suffisant pour mesurer l'azimuth avec une précision de 0,5 à 2 mgr.

Cependant il est clair que la précision de calage obtenue avec ladite nivelle d'alidade n'est pas acceptable pour donner la référence du zénith avec précision et autoriser une mesure à l'aide du codeur vertical avec une précision de 0,5 à 2 mgr identique à celle du codeur horizontal.

On a proposé pour cela de munir des théodolites de nivelle d'index vertical permettant de corriger le défaut de mise en station du théodolite et donc la position d'un index vertical associé au codeur vertical.

Cette proposition présente cependant un inconvénient majeur, à savoir qu'elle impose d'ajuster la nivelle d'index vertical à chaque position de l'alidade, c'est-à-dire à chaque nouvelle mesure d'angle.

On a tenté de remédier à cet inconvénient en équipant les théodolites, qu'ils soient optiques ou électroniques, de compensateurs automatiques de verticale.

Ceux-ci consistent d'une façon générale à introduire un compensateur sur le trajet optique du faisceau lumineux utilisé pour la mesure angulaire.

Deux principes sont plus précisément retenus dans la pratique, de nos jours.

L'un deux consiste à corriger la lecture du disque gradué intégré au codeur à l'aide d'un prisme suspendu à un pendule à fils croisés.

L'autre consiste à corriger la lecture du disque gradué par réfraction du faisceau lumineux à travers un liquide d'indice de réfraction constant, ou encore à l'aide d'une information liée à la réflexion d'un rayonnement sur la surface d'un liquide, tel que du mercure, comme cela est décrit dans le brevet US 4 108 539.

De part leur conception, ces dispositifs de compensation, c'est-à-dire de référence au zénith imposent au codeur angulaire vertical d'être disposé coaxialement à l'axe de rotation de la lunette de visée.

Cela est bien entendu gênant en ce qui concerne l'encombrement et l'implantation des divers éléments constituant l'équipement en question.

Par ailleurs, le débattement maximum du compensateur est limité entre environ ± 0,1 gr et ± 0,5 gr.

La présente invention vient maintenant proposer un nouveau dispositif de codage angulaire qui donne directement l'angle zénithal de 0 à 200 gr avec une grande précision.

Pour cela, la présente invention propose un codeur angulaire du type précité qui comprend :

— un pendule de faible dimension monté à rotation autour d'un axe horizontal au moins sensiblement confondu avec l'axe de référence du disque, et qui porte l'équipage détecteur représentant la verticale,

— des moyens de guidage optique solidaires du pendule et adaptés pour guider un rayonnement lumineux généré par un émetteur optique de cet équipage, vers un récepteur associé, selon un trajet optique prédéterminé intersectant ladite piste du disque, et

— un dispositif formant niveau à liquide, solidaire du pendule, et intercalé sur le trajet optique reliant l'émetteur et le récepteur associés précités, en amont du point d'intersection entre le trajet optique et ladite piste des marques du disque, lesdits moyens de guidage optique et le dispositif formant niveau à liquide étant adaptés pour assurer une déviation angulaire du point d'intersection du rayonnement lumineux et de la piste des marques du disque, par rapport à l'axe de pivotement, qui compense l'écart angulaire entre le pendule et la verticale.

L'un des avantages importants de l'invention est en particulier de ne pas imposer l'implantation du codeur angulaire vertical coaxialement à l'axe de rotation de la lunette de visée. Comme cela sera explicité par la suite, le codeur angulaire vertical conforme à l'invention peut en effet être solidaire de la lunette elle-même, et ce en un point quelconque de celle-ci.

Comme cela sera évoqué plus en détail par la suite, le pendule intégré au codeur angulaire constitue un indicateur de verticale approchée tandis que le dispositif formant niveau à liquide apporte une compensation fine pour tenir compte de l'écart angulaire entre le pendule et la verticale.

En effet, la longueur et le poids du pendule nécessairement limités pour autoriser l'installation de celui-ci dans un théodolite ne permettent pas de vaincre complètement les frottements inévitables entre le pendule et le palier portant celui-ci à rotation.

L'équipage détecteur optique représentant la verticale sera dit « équipage optique vertical » dans la suite de la description (ou encore second équipage lorsque le codeur comporte un premier équipage représentant la direction déterminée et un second équipage représentant la verticale), sans que cette expression puisse être considérée comme limitative en ce qui concerne la position physique de cet équipage.

De préférence, selon l'invention, les moyens de guidage optique sont adaptés pour introduire un rayonnement généré par l'émetteur optique de l'équipage optique vertical, dans le liquide du dispositif formant niveau à liquide, en vue d'assurer une réflexion dudit rayonnement sous la surface libre du liquide.

Plus précisément, de façon préférentielle, le dispositif formant niveau à liquide comprend une cuve contenant le liquide et qui comporte deux faces latérales au moins partiellement transparentes au rayonnement lumineux généré par l'émetteur optique pour autoriser respectivement l'entrée du rayonnement dans le liquide, et la sortie du rayonnement hors du liquide, après réflexion sous la surface libre de celui-ci, lesdits moyens de guidage optique étant adaptés pour diriger le rayonnement lumineux provenant de l'émetteur optique perpendiculairement à la face latérale d'entrée.

Cette dernière caractéristique permet d'éviter toute réfraction du rayonnement lors de la pénétration dans le liquide, et de ce fait seule une réfraction à la sortie du liquide doit être prise en compte pour la détermination des paramètres des moyens de guidage optique.

Selon d'autres caractéristiques avantageuses de la présente invention, les moyens de guidage optique comprennent d'une part un objectif d'entrée intercalé entre le dispositif formant niveau à liquide et l'émetteur optique de l'équipage optique vertical, cet émetteur étant placé au foyer de l'objectif d'entrée, et comprennent d'autre par un objectif de sortie intercalé entre le dispositif formant niveau à liquide et le récepteur de l'équipage optique vertical, la piste des marques du disque étant coplanaire au plan focal de l'objectif de sortie.

Les moyens de guidage optique comprennent avantageusement des miroirs, le nombre de ceux-ci disposés entre le dispositif formant niveau à liquide et l'objectif de sortie était pair. Selon une autre caractéristique préférentielle de l'invention, le codeur angulaire comprend de plus un frein apte à amortir les oscillations du pendule.

Selon un mode de réalisation simple et économique, les oscillations du pendule sont amorties selon le procédé classique des courants de Foucault. Pour cela, le frein comporte un élément électriquement conducteur, et au moins un générateur de champ magnétique, disposés adjacents, l'un sur le pendule, l'autre sur un bâti fixe portant le pendule à pivotement.

Selon une autre caractéristique avantageuse de l'invention permettant en particulier une implantation simple et compacte des différents éléments du codeur, les moyens de guidage optique comprennent :

— des premiers moyens de guidage aptes à diriger le rayonnement lumineux généré par l'émetteur optique de l'équipage optique vertical, vers le dispositif formant niveau à liquide, selon une incidence sensiblement parallèle au disque, et

— des seconds moyens de guidages disposés sur le trajet optique entre le dispositif formant niveau à liquide et le disque, aptes à récupérer le rayonnement lumineux en sortie du dispositif formant niveau à liquide et à dévier ce rayonnement en direction de la piste des marques, selon une incidence sensiblement normale au disque.

Afin de compenser le désalignement entre l'axe de pivotement relatif des équipages détecteurs optiques qui correspond à l'axe de pivotement du pendule, par rapport à l'axe de référence du disque, correspondant le cas échéant à l'axe de rotation de celui-ci, l'un des équipages détecteurs comprend deux ensembles détecteurs comportant chacun un dispositif émetteur optique et un dispositif récepteur optique associés, les dispositifs récepteurs étant sensiblement diamétralement opposés par rapport à l'axe de pivotement relatif des équipages.

Plus précisément, celui des équipages détecteurs qui comprend deux ensembles détecteurs est de préférence l'équipage optique vertical porté par le pendule et représentant la verticale. Dans un tel cas, l'équipage optique vertical comporte un ensemble principal comprenant ledit émetteur optique et ledit récepteur optique associés sur le trajet optique desquels est intercalé le dispositif formant niveau à liquide, et un ensemble auxiliaire qui comprend un dispositif émetteur optique auxiliaire et un dispositif récepteur optique auxiliaire, ce dernier étant sensiblement diamétralement opposé au récepteur optique de l'ensemble principal, par rapport à l'axe de pivotement relatif, le rayonnement généré par le dispositif émetteur optique auxiliaire étant dirigé directement vers le dispositif récepteur optique auxiliaire associé avec la seule interposition du disque sur le trajet optique auxiliaire reliant ces dispositifs.

De façon avantageuse, les deux dispositifs récepteurs sont plus précisément équidistants de l'axe de pivotement relatif, c'est-à-dire symétriques par rapport à celui-ci.

Selon une autre caractéristique importante de la présente invention, la focale f de l'objectif de sortie répond à la relation :

$f = R/n \cos \beta$, dans laquelle

R représente la distance séparant l'axe de pivotement relatif et le point d'intersection entre le trajet optique et la piste de marques prévue sur le disque,

n représente l'indice de réfraction du liquide contenu dans le dispositif formant niveau à liquide, et

$\beta$ représente l'angle du faisceau émergeant de ce dispositif avant déviation par les seconds moyens de guidage en direction du disque, par rapport à un plan passant par l'axe de pivotement relatif et le point d'intersection entre la piste des marques prévue sur le disque et le rayonnement lumineux.

Plus précisément encore, selon un mode de réalisation considéré actuellement comme préférentiel, le codeur angulaire conforme à la présente invention, pour le codage d'angle zénithal entre une direction déterminée variable et la verticale, en particulier pour théodolite comprend :

— un disque qui comporte une série de marques réparties sur une piste circulaire centrée sur un axe de référence horizontal, et qui de préférence tourne autour de celui-ci, les marques, radiales, étant angulairement espacées,

— un premier et un second équipages détecteurs optiques susceptibles d'un pivotement relatif autour d'un axe coaxial à l'axe de référence du disque, les premier et second équipages détecteurs représentant respectivement, par rapport à l'axe de pivotement relatif, ladite direction déterminée et la verticale, chaqun des équipages détecteurs comportant des moyens émetteurs optiques et des moyens récepteurs optiques associés, placés en regard de la piste des marques pour détecter la présence de celles-ci devant chacun desdits équipages, et

— des moyens de mesure du décalage angulaire entre les équipages détecteurs, qui sont sensibles à la détection des marques radiales par chacun des équipages,

— un pendule de faible dimension monté à rotation autour d'un axe horizontal au moins sensiblement confondu avec l'axe de référence du disque, et qui porte le second équipage détecteur,

— un dispositif formant niveau à liquide, solidaire du pendule,

— des moyens de guidage optique solidaires du pendule et adaptés pour guider un rayonnement lumineux généré par un émetteur optique du second équipage, vers un récepteur associé, selon un trajet optique prédéterminé intersectant la piste des marques du disque, et sur lequel est intercalé le dispositif formant niveau à liquide, les moyens de guidage optique comprenant :

— des premiers moyens de guidage aptes à diriger le rayonnement lumineux généré par l'émetteur optique du second équipage détecteur, selon une incidence parallèle au disque, vers

— un objectif d'entrée disposé en amont du dispositif formant niveau à liquide sur le trajet optique et au foyer duquel est disposé l'émetteur optique du second équipage détecteur, de telle sorte que le rayonnement pénètre dans le liquide sous forme d'un faisceau parallèle, par une face latérale d'entrée du dispositif formant niveau à liquide, selon une incidence normale à cette face, soit réfléchi sous la surface du liquide et ressorte du liquide, parallèlement au disque, par une face latérale de sortie du dispositif formant niveau à liquide,

— des moyens de guidage optique auxiliaires aptes à récupérer le rayonnement en sortie du dispositif formant niveau à liquide pour diriger celui-ci, selon une incidence concourante à l'axe de pivotement relatif vers un objectif de sortie, et

— des seconds moyens de guidage optique disposés entre l'objectif de sortie et la piste des marques prévue sur le disque, aptes à dévier le rayonnement en direction du disque, selon une incidence normale à celui-ci, le plan focal de l'objectif de sortie coïncidant avec la piste des marques du disque, sur le trajet optique.

Selon ce mode de réalisation préférentiel, le second équipage détecteur de niveau comprend plus précisément :

— un ensemble principal comprenant ledit émetteur optique et ledit récepteur optique associés, sur le trajet optique desquels sont intercalés les moyens de guidage optique et le dispositif formant niveau à liquide, et

— un ensemble auxiliaire qui comporte un dispositif émetteur optique auxiliaire et un dispositif récepteur optique auxiliaire,

ce dernier étant symétrique du récepteur optique de l'ensemble principal par rapport à l'axe de pivotement relatif, le rayonnement généré par le dispositif émetteur optique auxiliaire étant dirigé directement vers le dispositif récepteur optique auxiliaire avec la seule interposition du disque sur le trajet optique auxiliaire reliant ces dispositifs

— et la focale f de l'objectif de sortie répondant à la relation :

$$f = R/n.$$

D'autres caractéristiques et avantages de la présente invention apparaîtront à la lecture de la description détaillée qui va suivre et en regard des dessins annexés donnés à titre d'exemple non limitatif, et sur lesquels :

— la figure 1 représente une vue schématique, en perspective, d'un codeur angulaire pour le codage d'angle zénithal conforme à la présente invention,

— la figure 2 représente une vue latérale selon un angle d'observation parallèle à l'axe de référence du disque, illustré schématiquement par la flèche référencée II sur la figure 1, de la majeure partie des moyens de guidage optique d'un codeur angulaire conforme à la présente invention,

— la figure 3 représente une vue de dessus selon un angle de vision référencé III sur les figures 1 et 2 des moyens de guidage optique disposés immédiatement en aval du récepteur optique du second équipage détecteur,

— la figure 4 représente une vue latérale de l'émetteur optique du second équipage détecteur d'un codeur angulaire zénithal conforme à l'invention, selon un angle d'observation perpendiculaire à l'angle d'observation de la figure 2 et référencé IV sur les figures 1 et 2.

La description détaillée qui va suivre évoquera successivement la structure générale du codeur angulaire zénithal conforme à la présente invention, le principe de mesure, la structure détaillée du second équipage détecteur optique intégré au codeur, et enfin précisera le processus de correction automatique.

On va dans un premier temps décrire la structure générale du codeur angulaire représenté sur les figures.

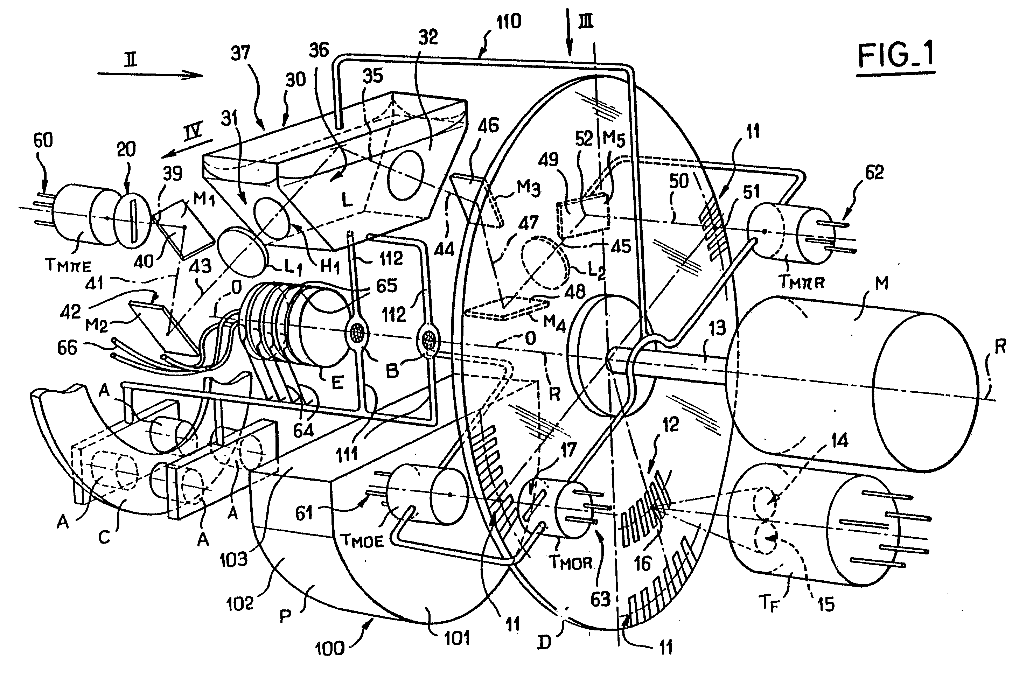

D'une façon générale, comme cela est en particulier représenté sur la figure 1, le codeur angulaire comprend un disque D généralement vertical comportant des marques radiales 11, 12 et dont l'axe horizontal est référencé R-R, un premier équipage détecteur $T_F$ adapté pour détecter les marques 12, et une masse P formant pendule, montée à rotation sur des paliers B, par exemple du type roulement à billes, autour d'un axe O-O au moins sensiblement coaxial à l'axe R-R du disque D. Ce pendule P porte d'une part un dispositif formant niveau à liquide L, d'autre part des moyens optiques — miroirs $M_1$ à $M_5$ — objectifs $L_1$, $L_2$— et supporte par ailleurs un second équipage détecteur comportant les éléments référencés $T_{M\pi E}$, $T_{M\pi R}$, $T_{MOE}$ et $T_{MOR}$, pour détecter les marques 11 du disque. Les éléments $T_{M\pi E}$ et $T_{MOE}$ représentent des émetteurs optiques, tandis que les éléments $T_{M\pi R}$ et $T_{MOR}$ représentent des récepteurs optiques, ceux-ci étant associés deux à deux.

Le second équipage détecteur $T_{M\pi E}$, $T_{M\pi R}$, $T_{MOE}$ et $T_{MOR}$, porté par le pendule P est suceptible de pivotement relatif par rapport au premier équipage $T_F$, autour de l'axe O-O des paliers B, coaxial à l'axe de référence R-R du disque.

Le premier équipage détecteur optique $T_F$ représente la direction déterminée dont on souhaite mesurer l'angle par rapport à la verticale, cette dernière étant représentée par le second équipage détecteur optique.

Pour cela, le premier équipage détecteur $T_F$ (qui représente la direction déterminée dont on souhaite mesurer l'angle zénithal) est solidaire de la lunette de visée, dans le cas de l'application au théodolite. Par ailleurs, dans un tel cas, le pendule P est libre de pivotement sur la lunette de visée autour de l'axe O-O et de même un moteur M portant et entraînant le disque est supporté par celle-ci coaxialement au pendule.

Plus précisément, selon le mode de réalisation représenté sur les figures, le premier équipage détecteur $T_F$ est disposé d'un premier côté du disque D.

Par contre, en ce qui concerne le second équipage détecteur, on remarquera que les récepteurs $T_{M\pi R}$ et $T_{MOR}$ sont disposés du même premier côté du disque D que le premier équipage $T_F$, tandis que les émetteurs optiques $T_{M\pi E}$, $T_{MOE}$ sont disposés du côté opposé, second, du disque.

Le dispositif formant niveau liquide L est superposé au pendule P, sur ledit second côté du disque en s'étendant généralement parallèlement au disque D. Les miroirs $M_1$ à $M_5$ et les objectifs $L_1$ et $L_2$ sont disposés de part et d'autre du dispositif formant niveau à liquide dans une zone d'extension générale parallèle au disque D, située au-dessus de l'axe O-O de pivotement du pendule.

Les miroirs $M_1$ et $M_2$ et l'objectif $L_1$ sont disposés entre l'émetteur $T_{M\pi E}$ et le dispositif formant niveau à liquide L. Les miroirs $M_3$, $M_4$ et $M_5$ et l'objectif $L_2$ sont disposés entre le dispositif formant niveau à liquide L et le récepteur $T_{M\pi R}$, et plus précisément entre le dispositif formant niveau à liquide L et les marques 11 du disque D.

La structure et l'agencement de ces moyens optiques, — miroirs $M_1$ à $M_5$ — objectifs $L_1$ et $L_2$ — dispositif formant niveau à liquide L seront décrit plus en détail ultérieurement.

On va maintenant rappeler rapidement le principe de mesure. La description de ce principe qui va suivre pourra par ailleurs être complétée par une lecture des demandes de brevet en France précitées n° 2 270 722, 2 304 224 et 2 406 804.

Le disque D est entraîné en rotation, à vitesse constante, autour de l'axe de référence horizontale R-R par le moteur M. Pour cela, le moteur M dont l'arbre 13 est relié au disque D peut être un moteur synchrone alimenté par un courant alternatif à fréquence constante.

Comme cela a été précédemment évoqué, une face du disque D porte une double série de marques radiales 11, 12 réparties sur des pistes en couronne, concentriques, centrées sur l'axe de référence R-R. Le disque D est par exemple un disque en verre transparent. Les marques 12 de la piste radialement la plus intérieure sont formées de traits de matériau réfléchissant la lumière, s'étendant radialement, et les marques 11 de la piste radialement la plus extérieure sont formées soit, de façon similaire de traits radiaux réfléchissant la lumière soit, de traits radiaux occultant la lumière.

Ainsi, les marques 12 de la piste radialement la plus intérieure peuvent être détectées par le premier équipage détecteur $T_F$ qui comporte en combinaison un émetteur et un récepteur optique, tels qu'une diode électroluminescente schématiquement référencée 14 et une photodiode schématiquement référencée 15, juxtaposées.

L'émetteur optique 14 est orienté généralement perpendiculairement au disque D pour émettre selon une incidence sensiblement normale à celui-ci, comme représenté sur la figure 1. De préférence, l'émetteur optique 14 et le récepteur optique 15 sont focalisés sur un trajet circulaire 16 des marques 12 à l'aide de systèmes optiques de concentration non représentés.

Ainsi, selon la présence ou l'absence d'une marque réfléchissante 12 au niveau du point focal du premier équipage détecteur $T_F$, la photodiode 15 reçoit ou ne reçoit pas la lumière émise par la diode électroluminescente 14.

De tels lecteurs optiques travaillant par réflexion sont bien connus de l'homme de l'art et ne seront pas décrits plus en détail par la suite.

De façon similaire, les moyens émetteurs optiques $T_{M\pi E}$ et $T_{MOE}$ et les moyens récepteurs optiques $T_{M\pi R}$ et $T_{MOR}$ du second équipage détecteur, placés en regard des marques 11 radialement les plus extérieures du disque D, de part et d'autre de celui-ci détectent le passage de ces marques.

Cependant, à la différence du premier équipage détecteur $T_F$ travaillant par réflexion, le second équipage détecteur $T_{M\pi E}$, $T_{MOE}$, $T_{M\pi R}$, $T_{MOR}$, représentant la verticale, travaille par transmission.

En effet, comme cela a été précédemment indiqué, le second équipage détecteur comprend des moyens émetteurs optiques, $T_{M\pi E}$, $T_{MOE}$ et les moyens récepteurs optiques $T_{M\pi R}$, $T_{MOR}$ disposés optiquement en regard, de part et d'autre du disque D, en vis-à-vis de la piste des marques 11 radialement les plus extérieures.

Dans ces conditions, selon l'absence ou la présence d'une marque 11 sur le trajet optique séparant les moyens émetteurs et les moyens récepteurs du second équipage détecteur, ces derniers reçoivent ou ne reçoivent pas la lumière émise par les moyens émetteurs associés.

Là encore, de tels lecteurs optiques sont bien connus de l'homme de l'art et ne seront pas décrits plus en détail par la suite.

On notera cependant que de façon avantageuse, les moyens émetteurs peuvent être formés là encore de diodes électroluminescentes et les moyens récepteurs de photodiodes.

On remarquera par ailleurs, que comme cela apparaît à l'examen de la figure 1, selon le mode de réalisation représenté sur les figures, le second équipage détecteur se décompose en deux ensembles détecteurs $T_{M\pi E}$, $T_{M\pi R}$ d'une part et $T_{MOE}$, $TM_{OR}$ d'autre part muni chacun d'un dispositif émetteur optique $T_{M\pi E}$, $T_{MOE}$ et d'un dispositif récepteur optique associé $T_{M\pi R}$, $T_{MOR}$ disposés respectivement de part et d'autre du disque D. Les récepteurs optiques respectifs $T_{M\pi R}$, $T_{MOR}$ de ces ensembles sont disposés diamétralement opposés par rapport à l'axe de pivotement relatif O-O des équipages, et de préférence de façon symétrique par rapport à cet axe.

Une telle disposition utilisant deux ensembles détecteurs, déjà écrite dans les brevets Français antérieurs précités, permet d'éliminer dans une large mesure les erreurs pouvant résulter d'une coïncidence imparfaite entre l'axe de rotation du disque R-R et de celui O-O des équipages détecteurs, ainsi que les erreurs résultant des fluctuations de la position moyenne de l'axe R-R du disque.

Plus précisément encore, le second équipage détecteur comprend un ensemble principal comprenant l'émetteur optique référencé $T_{M\pi E}$, et le récepteur optique associé $T_{M\pi R}$ sur le trajet optique desquels sont intercalés d'une part les moyens de guidage optique miroir $M_1$ à $M_5$, objectifs $L_1$ et $L_2$, qui seront décrits plus en détail par la suite et d'autre part un dispositif formant niveau à liquide.

Par ailleurs, le second équipage détecteur comporte un ensemble auxiliaire qui comprend le dispositif émetteur optique auxiliaire référencé $T_{MOE}$ et le dispositif récepteur optique auxiliaire référencé $T_{MOR}$, ce dernier étant comme cela a été précédemment évoqué disposé sensiblement diamétralement au récepteur optique $T_{M\pi R}$ de l'ensemble principal, et de préférence symétrique de celui-ci par rapport à l'axe de pivotement relatif O-O.

Le décalage angulaire entre les premier et second équipages détecteurs ainsi conçus, par rapport à l'axe O-O est déterminé par des moyens de mesure recevant les signaux générés par les moyens récepteurs 15, $T_{M\pi R}$, $T_{MOR}$ des différents équipages détecteurs. Ces moyens de mesure connus de l'homme de l'art et décrits par exemple dans les demandes de brevet Français précitées publiées sous les n° 2 270 722, 2 304 224 et 2 406 804, ne seront pas décrits par la suite.

On rappellera toutefois qu'une mesure approchée du décalage angulaire entre les deux équipages mobiles est effectuée à partir des signaux générés sur les récepteurs des équipages à la suite de la détection d'un repère unique par tour de rotation du disque D.

Ce repère peut être composé par exemple d'une ou plusieurs marques effacées ou encore d'une marque de largeur modifiée.

En complément d'une telle mesure approchée, une mesure fine du décalage angulaire en question est obtenue par établissement de la moyenne des déphasages entre les signaux générés par les moyens de réception des équipages détecteurs, sur un nombre entier de tours de rotation du disque D ou le plus proche possible d'un nombre entier de tours si l'angle zénithal est variable.

On va maintenant décrire la structure du pendule et du second équipage détecteur optique, et en particulier des moyens de guidage optiques $M_1$ à $M_5$, $L_1$ et $L_2$ et du dispositif formant niveau à liquide L représentés sur la figure 1 et intercalés entre l'émetteur $T_{M\pi E}$ et le récepteur $T_{M\pi R}$.

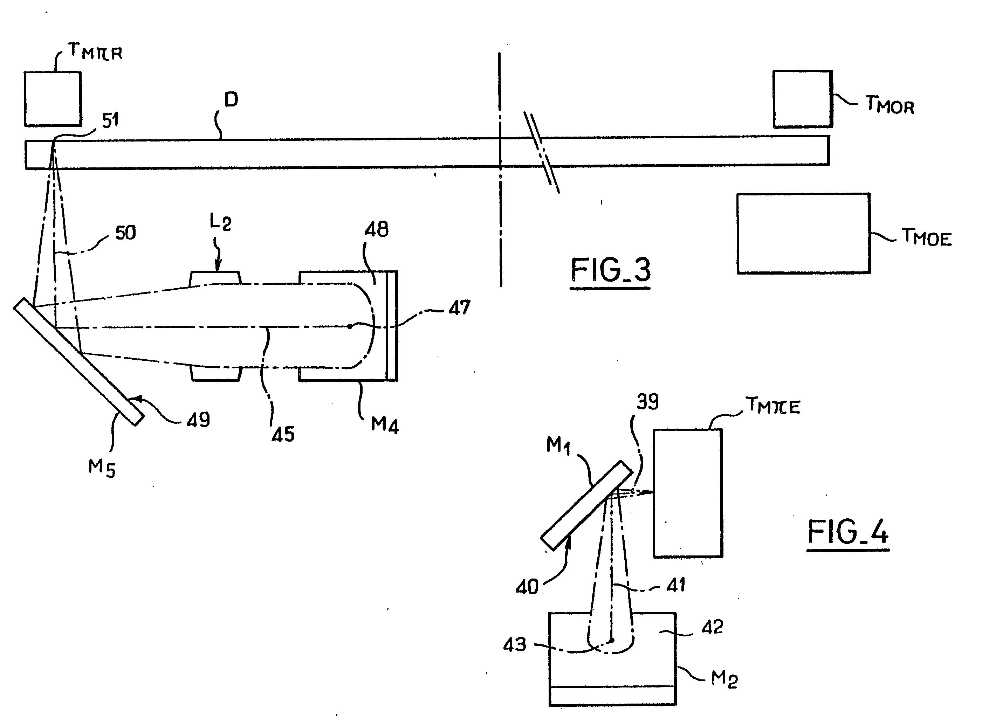

Toutefois, on notera avant tout que comme cela apparaît sur les figures 1 et 3, le rayonnement généré par le dispositif émetteur optique auxiliaire $T_{MOE}$ est dirigé directement vers le dispositif récepteur optique auxiliaire $T_{MOR}$ avec la seule interposition du disque D et plus précisément de la piste des marques 11 radialement les plus extérieures, sur le trajet optique séparant ces dispositifs $T_{MOE}$ et $T_{MOR}$. Ledit trajet optique séparant l'émetteur $T_{MOE}$ du récepteur $T_{MOR}$ est de préférence perpendiculaire au disque et donc au trajet en rotation des marques 11 radialement les plus extérieures. On notera que de préférence, le récepteur $T_{MOR}$ est diaphragmé, comme cela est représenté en 17 afin qu'une seule marque radiale 11 éclairée par l'émetteur $T_{MOE}$ soit détectée.

La masse du « pendule » P doit être entendue comme englobant la totalité des éléments solidaires du second équipage détecteur et portés à pivotement autour de l'axe O-O par l'intermédiaire des paliers B. Cependant, la masse du pendule P est formée pour l'essentiel d'un bloc 100 suspendu aux paliers B par l'intermédiaire de suspentes rigides parallèles entre elles référencées 111, et perpendiculaires à l'axe O-O. Ces suspentes 111 sont intégrées à un châssis support 110 schématiquement représenté, monté à pivotement sur les paliers B, et qui supporte les émetteurs optiques $T_{M\pi E}$, $T_{MOE}$, les récepteurs optiques $T_{M\pi R}$, $T_{MOR}$, le dispositif formant niveau à liquide L, les miroirs $M_1$ à $M_5$ et les objectifs $L_1$ et $L_2$.

Pour simplifier les dessins, on n'a pas représenté sur les figures les parties du châssis 110 supportant l'émetteur $T_{M\pi E}$, les miroirs $M_1$, $M_2$, $M_3$, $M_4$ et les objectifs $L_1$ et $L_2$.

Par ailleurs, on ne décrira pas par la suite la structure de ce châssis 110. Cette structure est en effet susceptible de nombreuses variantes et l'illustration donnée n'est que très schématique.

Le bloc 100 précité est délimité généralement par deux surfaces planes radiales 101, parallèles entre elles et perpendiculaires à l'axe O-O de pivotement du pendule, une surface latérale 102 semi-cylindrique, et une surface plane supérieure 103 parallèle à l'axe O-O, sensiblement diamétrale à l'égard de la surface latérale 102.

La masse du bloc 100 et la distance de celui-ci à l'axe O-O (longueur des suspentes 111) sont déterminées selon la place disponible et en fonction de la masse des divers éléments supportées par le châssis 110, pour fournir un couple de rappel optimum.

Les suspentes 111 se prolongent à l'opposé de l'axe O-O par des pieds supports 112 d'une cuve 30 formant niveau à liquide L. Cette cuve 30 est délimitée par deux parois planes latérales, principales, 36, 37, parallèles entre elles et perpendiculaires à l'axe O-O, une paroi plane inférieure 38 parallèle à la face 103 du bloc 100 (et qui serait de préférence horizontale si les frottements des paliers B pouvaient être négligés) et deux voiles plans latéraux 31, 34 parallèles à l'axe O-O, respectivement d'entrée et de sortie du rayonnement généré par l'émetteur $T_{M\pi E}$ après réflexion sous la surface supérieure horizontale 33 d'un liquide 32 contenu dans la cuve 30.

Les voiles latéraux 31, 34 sont pour cela munis de hublots $H_1$, $H_2$ respectivement, transparents au rayonnement généré par l'émetteur $T_{M\pi E}$.

Les voiles sont inclinés par rapport à la paroi inférieure 38, en convergeant en direction de l'axe O-O, selon une inclinaison qui sera précisée ultérieurement.

On notera que les axes des hublots $H_1$ et $H_2$ sont disposés dans un même plan perpendiculaire à l'axe O-O du pendule. Ce plan contenant les axes des hublots $H_1$ et $H_2$ sera dit plan de symétrie de la cuve, dans la suite de la description.

Par ailleurs, pour faciliter la description qui va suivre, on définira tout d'abord un premier plan de référence du pendule qui sera dit plan de référence transversal. Celui-ci est perpendiculaire à l'axe O-O. Ce plan est constamment vertical. On définira également un second plan de référence du pendule et qui sera dit plan de référence longitudinal. Ce plan de référence longitudinal passe par l'axe O-O et le centre de gravité du pendule. Le plan de référence longitudinal ainsi défini est en principe vertical. Toutefois, dans la pratique, ce plan de référence longitudinal est incliné par rapport à la verticale, selon une inclinaison qui dépend de l'amplitude des frottements dus aux paliers B.

L'intersection entre ces deux plans de référence, transversal et longitudinal, détermine un axe de référence du pendule qui coïnciderait avec la verticale si les frottements pouvaient être négligés.

Le trajet optique suivi par le rayonnement généré par l'émetteur $T_{M\pi E}$ avant de parvenir au récepteur associé $T_{M\pi R}$, passe par un objectif

d'entrée $L_1$, le hublot d'entrée $H_1$ de la cuve 30, une réflexion sous la surface supérieure 33 du liquide 32, le hublot de sortie $H_2$, un objectif de sortie $L_2$ et la piste des marques radiales 11 du disque.

L'axe de l'objectif d'entrée $L_1$ est coaxial au hublot d'entrée $H_1$ de la cuve 30, c'est-à-dire perpendiculaire au plan du voile latéral d'entrée 31.

L'émetteur $T_{M\pi E}$ est disposé au foyer de l'objectif d'entrée $L_1$. De plus, le rayonnement généré par l'émetteur $T_{M\pi E}$ est dirigé vers cet objectif d'entrée $L_1$, en étant centré sur l'axe optique de ce dernier, c'est-à-dire parallèlement au plan de référence transversal du pendule et perpendiculairement au voile latéral d'entrée 31 de la cuve.

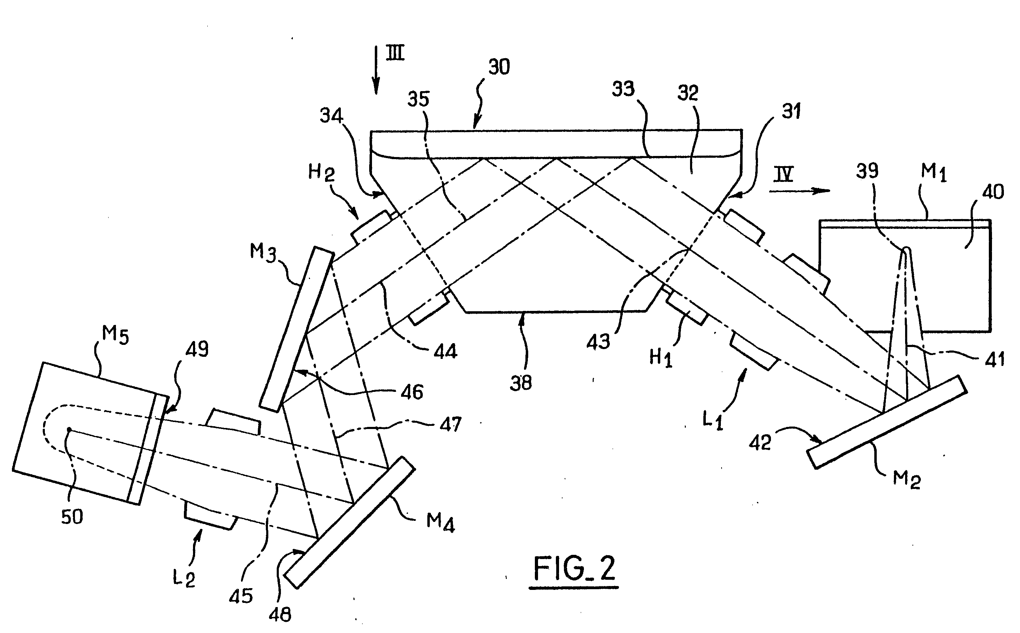

Comme cela est représenté en particulier sur la figure 2, l'objectif $L_1$ transforme de ce fait le faisceau de lumière divergeant généré par l'émetteur $T_{M\pi E}$ en un faisceau de lumière parallèle traversant le hublot d'entrée $H_1$ transparent incorporé à la face latérale d'entrée 31 de la cuve 30.

Pour cela, on peut prévoir par exemple de disposer l'émetteur $T_{M\pi E}$ dans l'axe de l'objectif $L_1$ et au foyer de celui-ci. L'émetteur $T_{M\pi E}$ doit alors émettre parallèlement au plan de référence transversal du pendule et perpendiculairement à la face d'entrée de la cuve 30, afin d'éviter de préférence toute réfraction lors de la pénétration dans le liquide 32.

Toutefois, afin d'autoriser une implantation plus simple et plus compacte de l'émetteur $T_{M\pi E}$, celui-ci peut être disposé de façon à émettre en direction du disque D selon un axe optique 39 perpendiculaire au plan de référence transversal du pendule, c'est-à-dire parallèlement à l'axe de pivotement O-O. Dans ces conditions, des moyens de guidage optiques comprenant les miroirs $M_1$ et $M_2$ sont intercalés entre l'émetteur $T_{M\pi E}$ et l'objectif d'entrée $L_1$ pour dévier le rayonnement de l'émetteur $T_{M\pi E}$ (axe optique 39) vers l'objectif $L_1$, selon une incidence parallèle au plan de référence transversal du pendule et perpendiculaire à la face d'entrée 31 du niveau à liquide 30.

Pour cela, un premier miroir $M_1$ est disposé en regard de l'émetteur $T_{M\pi E}$, en présentant comme illustré figure 4 une surface réfléchissante 40 opposée au disque, perpendiculaire au plan de référence longitudinal du pendule et inclinée de 45° vers le bas en regard du plan de référence transversal du pendule. Ainsi, le rayonnement généré par l'émetteur $T_{M\pi E}$ centré sur l'axe optique 39 est renvoyé en direction d'un second miroir $M_2$ sousjacent au miroir $M_1$, selon une direction moyenne 41 parallèle à l'axe de référence du pendule (intersection des plans de référence transversal et longitudinal).

De plus, le miroir $M_1$ est placé à une distance de l'émetteur $T_{M\pi E}$ tel que la direction moyenne 41 du rayonnement renvoyé par le miroir $M_1$ coïncide avec le plan vertical de symétrie du niveau à liquide 30, parallèle au plan de référence transversal du pendule et passant par les axes

des hublots $H_1$ et $H_2$, ou encore des objectifs $L_1$ et $L_2$.

Le second miroir $M_2$ présente une surface réfléchissante 42 perpendiculaire au plan de référence transversal du pendule et inclinée sur le plan de référence longitudinal du pendule, vers le haut, d'un angle tel que le miroir $M_2$ renvoie le rayonnement reçu du miroir $M_1$, selon un axe optique 43 coaxial à l'objectif d'entrée $L_1$ et au hublot d'entrée $H_1$, c'est-à-dire parallèle au plan de référence transversal du pendule et perpendiculaire au voile d'entrée du niveau à liquide 30. L'orientation normale à la face d'entrée 31 du faisceau incident parallèle centré sur l'axe 43 évite toute réfraction lors de l'entrée du rayonnement dans le liquide 32.

Plus précisément, en appelant $\beta$ l'inclinaison de la face latérale d'entrée 31 par rapport au plan de référence longitudinal du pendule, l'angle $\gamma$ d'inclinaison de la surface réfléchissante 42 par rapport au même plan de référence longitudinal doit être égal à 45° + $\beta$/2. A titre d'exemple, on peut prendre $\beta$ = 35° et $\gamma$ = 62,5°.

Le rayonnement issu de l'objectif d'entrée $L_1$ et pénétrant dans le liquide 32, centré sur l'axe optique 43, parvient sous la surface inférieure 33 du liquide 32.

Dans l'hypothèse théorique où les frottements inhérents aux paliers B serait négligeable, l'inclinaison de l'axe optique 43 en regard de la surface supérieure 33 du liquide 32, nécessairement horizontale serait égale à l'angle $\beta$ précité entre la face latérale d'entrée 31 de la cuve et le plan de référence longitudinal.

Après réflexion sous la surface 33 du liquide 32, le rayonnement optique est renvoyé vers le second hublot transparent $H_2$ prévu dans la face latérale 34 de la cuve 30 sous forme d'un faisceau toujours parallèle centré sur son axe optique référencé 35 sur les figures. La surface supérieure 33 du liquide 32 étant bien entendu constamment horizontale, cet axe optique 35 est toujours symétrique de l'axe optique 43 incident, par rapport à la verticale. Cet axe optique 35 est par ailleurs coplanaire au plan de symétrie de la cuve 30 et donc parallèle au plan de référence transversal du pendule.

A sa sortie du liquide 32, le rayonnement lumineux est susceptible d'une réfraction. Toutefois, la face latérale 34 est symétrique de la face latérale d'entrée 31 par rapport au plan de référence longitudinal du pendule, de telle sorte que l'axe optique théorique 35 soit perpendiculaire à la face latérale de sortie 34 et donc coaxial au hublot $H_2$. Ainsi, en négligeant les frottements sur le palier B, aucune réfraction du rayonnement ne serait produite. Dans la pratique, en raison des frottements inévitables, le plan de référence longitudinal du pendule n'est pas rigoureusement vertical, et de ce fait une réfraction a lieu inévitablement en sortie de la cuve 30. Par conséquent, le faisceau parallèle émergeant du hublot $H_2$ de sortie est centré sur un axe optique 44 légèrement incliné en regard de l'axe optique 35 précité.

Ce faisceau parallèle émergeant du hublot $H_2$

pourrait être dirigé directement vers l'objectif de sortie $L_2$.

Toutefois, comme cela est représenté sur la figure 2, le faisceau parallèle centré sur l'axe optique 44 est de préférence dévié par des miroirs $M_3$ et $M_4$ adaptés pour diriger le faisceau sur l'objectif $L_2$ selon une incidence représentée par l'axe optique 45 concourante de l'axe de pivotement relatif O-O entre les équipages détecteurs, l'objectif de sortie $L_2$ étant bien entendu coaxial à cet axe optique 45.

Pour cela, le miroir $M_3$ qui reçoit le rayonnement émergeant du hublot $H_2$ présente une surface réfléchissante 46 perpendiculaire au plan de référence transversal du pendule et inclinée vers le bas en regard du plan de référence longitudinal. Le rayonnement est ainsi renvoyé par le miroir $M_3$ sous forme d'un faisceau parallèle centré sur l'axe optique 47 parallèle au plan de référence transversal et contenu dans le plan de symétrie de la cuve 30 en direction d'un quatrième miroir $M_4$. Ce dernier possède une surface réfléchissante 48 perpendiculaire au plan de référence transversal du pendule et inclinée vers le haut en regard du plan de référence longitudinal, pour réfléchir le rayonnement sous forme d'un faisceau parallèle centré sur l'axe optique 45 précité concourant de l'axe de pivotement relatif O-O et coaxial à l'objectif de sortie $L_2$. A titre d'exemple, la surface réfléchissante 46 peut être inclinée de 20° vers le bas en regard du plan de référence longitudinal, tandis que l'inclinaison vers le haut de la surface réfléchissante 48 par rapport au même plan de référence longitudinal est de 45°. Dans un tel mode de réalisation particulier, le faisceau renvoyé par la surface réfléchissante 48 du miroir $M_4$ parvient sur l'objectif de sortie $L_2$ selon une incidence illustrée par l'axe optique 45 parallèle au plan de référence transversal du pendule et incliné de 75° sur le plan de référence longitudinal.

Le rayonnement focalisé par l'objectif de sortie $L_2$ est ensuite dévié vers les marques 11 radialement les plus extérieures du disque, et ce selon une incidence normale au disque D, par un miroir $M_5$.

Pour cela, le miroir $M_5$ disposé en regard de l'objectif $L_2$ possède une surface réfléchissante 49 inclinée de 45° en regard du plan de référence transversal d'une part et inclinée en regard du plan de référence longitudinal d'autre part selon une inclinaison égale à celle de l'axe optique 45 (75° en l'espèce).

Le miroir $M_5$ renvoie par conséquent le rayonnement en direction des marques 11 du disque sous forme d'un faisceau convergeant centré sur un axe optique référencé 50.

Là encore, si l'on néglige les frottements occasionés par les paliers B, l'axe optique 50 est parallèle à l'axe O-O de pivotement du pendule.

Par ailleurs, le miroir $M_5$ est positionné par rapport à l'objectif $L_2$ de telle sorte que celui-ci focalise le rayonnement au niveau d'un point 51 coïncidant avec la face du disque D qui porte les marques 11 précitées.

On remarquera que l'émetteur $T_{M\pi E}$ disposé en amont du miroir $M_1$ est diaphragmé par un cache 20, selon une fente.

La direction de la fente de ce cache 20 est telle que l'image de celle-ci donnée par la lentille $L_2$ de focal f soit radiale dans le plan des marques 11 du disque D.

Selon l'invention, la distance focale -f- de la lentille de sortie $L_2$ est déterminée par la relation f = R/n, relation dans laquelle R représente la distance séparant l'axe de pivotement relatif O-O du pendule et le point d'intersection 51 entre le trajet optique (50) et la piste de marques 11 prévue sur le disque D, tandis que -n- représente l'indice de réfraction du liquide 32 contenu dans le dispositif formant niveau à liquide L. La détermination de cette relation sera explicitée ultérieurement.

Par ailleurs, on notera que d'une façon plus générale, si les miroirs $M_3$ et $M_4$ sont omis, et si par conséquent le rayonnement centré sur l'axe optique 44 est dirigé directement sur la lentille $L_2$, la relation précitée doit être remplacée par la relation f = R/n cos β, relation dans laquelle β représente l'angle formé par le faisceau centré sur l'axe optique 44, avant déviation par le miroir $M_5$ en direction du disque, par rapport à un plan passant par l'axe de pivotement relatif O-O et le point 51 d'intersection entre la piste des marques 11 prévues sur le disque et le rayonnement lumineux.

Sur la figure 1, on a référencé 60 les broches d'alimentation de l'émetteur $T_{M\pi E}$, 61 les broches d'alimentation de l'émetteur $T_{MOE}$, 62 les broches de sortie du récepteur $T_{M\pi R}$, et 63 les broches de sortie du récepteur $T_{MOR}$.

Ces différentes broches sont reliées par l'intermédiaire d'éléments électriquement conducteurs directement intégrés au châssis 110 et isolés entre eux, à des patins ou frotteurs 64 en appui contre un collecteur d'alimentation référencé E et possédant des pistes conductrices 65 cylindriques de révolution autour de l'axe de pivotement relatif O-O et reliées respectivement à des conducteurs électriques 66 connectés aux moyens de mesure électronique de décalage angulaire.

Enfin, comme cela est représenté sur la gauche de la figure 1, le codeur angulaire conforme à la présente invention comprend un frein apte à amortir les oscillations du pendule. Ce frein est plus précisément basé sur le principe classique des courants de Foucault.

Selon le mode de réalisation représenté, le frein est disposé en dessous de l'axe O-O, en position adjacente au bloc 100, à l'opposé du disque D par rapport à ce dernier.

Le frein comprend une couronne C en matériau électriquement conducteur tel qu'une couronne de cuivre, solidaire du bâti, et s'étendant perpendiculairement à l'axe O-O du pivotement du pendule. Cette couronne C est disposée entre deux paires d'aimants permanents respectivement en regard, schématiquement référencés A, et supportés par le châssis support 110 du pendule, symétriquement par rapport à un plan perpendiculaire à l'axe O-O. Ainsi, lorsque le pendule P oscille autour de l'axe O-O, la couronne de cuivre C coupe le flux magnétique perpendiculaire à son plan créé par les pôles d'aimants permanents A, et de ce fait induit un amortissement des oscillations.

Afin d'être intégré à la lunette de visée de théodolite, le pendule P doit nécessairement posséder des longueurs et poids limités.

De ce fait, le couple de rappel à la verticale du pendule P, bien qu'il permette d'approcher la verticale, est insuffisant pour vaincre les couples de frottements des paliers B et du collecteur d'alimentation E du second équipage détecteur.

On va maintenant expliquer le processus de correction automatique obtenu avec la structure précitée.

Pour cela, on appellera trajet optique théorique le trajet optique suivi par le rayonnement de l'émetteur $T_{M\pi E}$ au récepteur $T_{M\pi R}$ si les frottements dus aux paliers B et au collecteur d'alimentation E étaient nuls.

On rappelle que selon la structure précitée, un tel trajet optique théorique est successivement parallèle à l'axe O-O, jusqu'au miroir $M_1$, vertical jusqu'au miroir $M_2$, coaxial à la lentille d'entrée $L_1$ et au hublot $H_1$ jusqu'à la surface supérieure 33 du liquide, coaxial au hublot de sortie $H_2$ jusqu'au miroir $M_3$, puis dévié par celui-ci et par le miroir $M_4$, pour devenir coaxial à la lentille de sortie $L_2$ et concourant à l'axe O-O, jusqu'au miroir $M_5$, qui dévie enfin le trajet perpendiculairement au plan du disque D et donc parallèlement à l'axe O-O.

On supposera maintenant que les frottements dûs aux paliers B et au collecteur d'alimentation induisent un écart angulaire α entre le plan de référence longitudinal du pendule et la verticale.

En omettant les moyens de correction propres à l'invention (miroirs $M_1$ à $M_5$, objectifs $L_1$ et $L_2$, dispositif formant niveau à liquide L) cet écart angulaire provoque un décalage angulaire, par rapport à l'équipage $T_F$, du point 51 d'intersection entre le trajet optique du rayonnement généré par l'émetteur $T_{M\pi E}$ et la piste des marques radiales 11.

Ce décalage angulaire est égal à α · R, en considérant que R représente le rayon du disque sur lequel s'inscrit le point 51 précité.

Il en est de même pour l'ensemble détecteur auxiliaire $T_{MOE}$, $T_{MOR}$.

En parallèle, les moyens de mesure connectés aux récepteurs optiques déterminent l'angle zénithal recherché sur la base de la relation générale :

$$Z = \frac{(T_F, T_{MO}) + (T_F, T_{M\pi}) - \pi}{2} + Z_0$$

relation dans laquelle :

$(T_F, T_{MO})$ = angle formé par les rayons du disque D passant par l'image sur le disque des fentes de diaphragme, ou par les points de focalisation, des récepteurs optiques $T_{MOR}$ et 15,

$(T_F, T_{M\pi})$ = angle analogue pour les récepteurs optiques $T_{M\pi R}$ et 15,

$Z_0$ = constante d'étalonnage spécifique à chaque codeur.

Il en résulte que la mesure de Z est entachée d'une erreur égale à α (écart angulaire précité).

Le dispositif de correction précité, conforme à la présente invention, élimine cette erreur.

Pour cela, plus précisément, le dispositif de correction selon l'invention, dans son mode de réalisation précédemment décrit est conçu de telle sorte que l'image de la fente du diaphragme 20 disposé devant l'émetteur optique $T_{M\pi E}$ soit déplacée tangentiellement à la gravure du disque pour donner un décalage angulaire égal à 2α R.

De fait, grâce à la structure proposée par l'invention, avec un écart angulaire α, l'axe optique 35 du rayonnement, après réflexion sous la surface 33 du liquide, est incliné de 2α par rapport au trajet optique théorique.

On remarquera que l'écart angulaire α ne modifie aucunement le trajet optique avant la réflexion sous la surface 33 du liquide 32 dans la mesure où tous les éléments optiques ($T_{M\pi E}$, $M_1$, $M_2$, $L_1$, $H_1$) insérés sur ce trajet, en amont de ladite surface, sont fixes les uns à l'égard des autres, ceci en prenant le pendule pour repère.

L'écart 2α de l'axe optique 35 se traduit par un écart égal à arcsin (n sin 2α) et assimilable à n 2α, de l'axe optique 44 par rapport au trajet optique théorique, en raison de la réfraction, en sortie de la cuve 30.

Ce même écart n 2α est retransmis par les miroirs $M_3$ et $M_4$ à l'objectif de sortie $L_2$.

Par conséquent, l'écart angulaire initiale α induit un décalage angulaire égal à f tgn 2α, et assimilable à fn 2α, du point 51 sur le disque (f représente la focale de l'objectif de sortie qui est précisément focalisé sur la piste des marques 11, comme indiqué précédemment).

Ce décalage angulaire fn 2α doit par ailleurs être égal à 2αR ce qui conduit à la relation précitée :

$$f = R/n.$$

On démontre aisément que si les miroirs $M_3$ et $M_4$ sont supprimés, le rayon émergeant de la cuve étant alors directement dirigé vers l'objectif $L_2$ qui est coaxial à l'axe optique 44, la focale -f- de l'objectif $L_2$ doit respecter la relation

$$f = R/\cos \beta,$$

dans laquelle β est l'angle formé par le faisceau avant le miroir $M_5$ (axe optique 44) avec un plan passant par l'axe R-R du disque et le point 51.

Les relations précitées seront aisément adaptées dans le cas où l'équipage détecteur solidaire du pendule ne comporterait qu'un seul ensemble $T_{M\pi E}$, $T_{M\pi R}$.

Le décalage angulaire alors requis serait égal à $\alpha R$ et non point $2\alpha R$ ce qui conduit à $f = R/2n$.

Pour respecter le signe de la compensation, le nombre de miroirs disposés entre la cuve 30 et l'objectif de sortie $L_2$ est pair.

Bien entendu, le mode de réalisation particulier qui vient d'être décrit ne doit pas être considéré comme limitatif, celui-ci étant susceptible de nombreuses variantes.

On peut par exemple envisager de remplacer le disque rotatif D précité par un disque fixe centré sur l'axe O-O de pivotement du pendule et comportant des pistes de repères coaxiales similaires à ce qui est décrit et représenté dans le brevet US 4 108 539 pour un codage angulaire absolu détectable par une matrice de récepteurs optiques adaptés. Dans un tel cas, l'équipage $T_F$ peut être supprimé. Les moyens de mesure associés aux moyens récepteurs $T_{M\pi R}$ et $T_{MOR}$ de l'équipage optique vertical porté par le pendule détectent alors l'écart angulaire entre la verticale et un repère déterminé du disque, ce dernier étant solidaire de la lunette de visée du théodolite, et toujours coaxial à l'axe de pivotement du pendule.

Par ailleurs, l'implantation des miroirs $M_1$ à $M_5$, des objectifs $L_1$ et $L_2$, de la cuve 30 et de l'émetteur $T_{M\pi E}$ est suceptible d'être l'objet de nombreuses variantes.

Selon l'exemple de réalisation précédemment décrit, le rayonnement lumineux généré par l'émetteur $T_{M\pi E}$ est dirigé grâce aux miroirs $M_1$ et $M_2$, en direction du dispositif formant niveau à liquide L selon une incidence normale à la face d'entrée 31. En d'autres termes, l'axe optique 43 est coaxial à l'objectif $L_1$ et au hublot d'entrée $H_1$.

Cette disposition évite toute réfraction du rayonnement lumineux lors de la pénétration dans le liquide 32.

Toutefois, puisque tous les éléments optiques ($T_{M\pi E}$, $M_1$, $M_2$, $L_1$, $H_1$) insérés sur le trajet optique en amont de la surface 33 du liquide 32, sont fixes les uns à l'égart des autres en prenant le pendule pour repère une réfraction du rayonnement lumineux à l'entrée du liquide ne présente aucun inconvénient majeur dans la mesure où l'angle de réfraction sera constant quelque soit l'écart angulaire entre le plan de référence longitudinal du pendule et la verticale. Ceci signifie que, même avec une réfraction à l'entrée du liquide, l'écart angulaire précité entre le plan de référence longitudinal du pendule et la verticale ne modifie aucunement le trajet optique avant la réflexion sous la surface 33 du liquide 32. Lorsque le rayonnement incident matérialisé par l'axe optique 43 n'est plus coaxial au hublot $H_1$, l'axe optique du rayonnement, à l'intérieur du liquide, en amont de la surface 33 présente simplement une inclinaison constante, indépendante de l'écart angulaire entre le plan de référence longitudinal du pendule et la verticale, mais liée à l'indice de réfraction du liquide et à l'angle d'incidence, par rapport à l'axe optique 43 précédemment décrit.

Dans un exemple de réalisation particulier, testé par la Demanderesse et ayant donné pleinement satisfaction, le liquide 32 est un silicone du genre méthylpolysiloxane d'une viscosité de 1 000 centistockes, et possédant un indice de réfraction de 1,403.

**Revendications**

1. Codeur angulaire pour le codage d'angle zénithal entre une direction déterminée variable et la verticale, en particulier pour théodolite, du type comprenant :
— un disque (D) qui comporte au moins une série de marques (11, 12) réparties sur une piste circulaire centrée sur un axe de référence (R-R) horizontal,
— au moins un équipage détecteur optique ($T_{M\pi E}$, $T_{M\pi R}$ ; $T_{MOE}$, $T_{MOR}$) susceptible d'un pivotement autour d'un axe (0-0) coaxial à l'axe de référence (R-R) du disque et qui représente la verticale par rapport à l'axe de pivotement (O-O), l'équipage optique précité comportant des moyens émetteurs optiques ($T_{M\pi E}$, $T_{MOE}$) et des moyens récepteurs optiques ($T_{M\pi R}$, $T_{MOR}$) associés, placés en regard de ladite piste de marques (11, 12) pour détecter les marques présentes devant celui-ci, et
— des moyens de mesure qui sont sensibles à la détection des marques (11, 12) par l'équipage ($T_{M\pi E}$, $T_{M\pi R}$ ; $T_{MOE}$, $T_{MOR}$), caractérisé en ce qu'il comprend :
— un pendule (P) de faible dimension monté à rotation autour d'un axe horizontal (O-O) au moins sensiblement confondu avec l'axe de référence (R-R) du disque (D) et qui porte l'équipage optique ($T_{M\pi E}$, $T_{M\pi R}$, $T_{MOE}$, $T_{MOR}$),
— des moyens de guidage optique ($M_1$, $M_2$, $M_3$, $M_4$, $M_5$) solidaires du pendulet (P) et adaptés pour guider un rayonnement lumineux généré par un émetteur optique ($T_{M\pi E}$) de l'équipage optique, vers un récepteur associé ($T_{M\pi R}$), selon un trajet optique prédétermié intersectant ladite piste de marques (11) du disque (D), et
— un dispositif formant niveau à liquide (L), solidaire du pendule (P), et intercalé sur le trajet optique reliant l'émetteur ($T_{M\pi E}$) et le récepteur ($T_{M\pi R}$) associés de l'équipage optique, en amont du point d'intersection, entre le trajet optique et ladite piste des marques (11) du disque (D), lesdits moyens de guidage optique ($M_1$, $M_2$, $M_3$, $M_4$, $M_5$) et le dispositif formant niveau à liquide (L) étant adaptés pour assurer une déviation angulaire du point d'intersection du rayonnement lumineux et de la piste des marques (11) du disque (D), par rapport à l'axe de pivotement (O-O), qui compense l'écart angulaire entre le pendule (P) et la verticale.

2. Codeur angulaire selon la revendication 1, caractérisé par le fait qu'il comprend deux équipages détecteurs optiques ($T_F$ ; $T_{M\pi E}$, $T_{M\pi R}$, $T_{MOE}$, $T_{MOR}$) susceptibles d'un pivotement relatif autour d'un axe coaxial à l'axe de référence du disque, le premier et le second équipages détecteurs optiques représentant respectivement, par rapport à l'axe de pivotement relatif (O-O) ladite direction déterminée et la verticale, et les moyens de mesure étant sensibles à la détection des marques (11, 12) par chacun des équipages pour déterminer le décalage angulaire entre ceux-ci.

3. Codeur angulaire selon l'une des revendications 1 et 2, caractérisé par le fait que le disque (D) est entraîné en rotation autour de l'axe de référence (R-R) et par le fait que les marques (11, 12) sont des marques radiales angulairement espacées par rapport à cet axe de référence (R-R).

4. Codeur angulaire selon l'une des revendications 1 à 3, caractérisé par le fait que les moyens de guidage optique ($M_1$-$M_5$) sont adaptés pour introduire le rayonnement généré par l'émetteur optique ($T_{M\pi E}$) du second équipage optique dans le liquide (32) du dispositif formant niveau à liquide (L) en vue d'assurer une réflexion dudit rayonnement sous la surface libre (33) du liquide.

5. Codeur angulaire selon la revendication 4, caractérisé par le fait que le dispositif formant niveau à liquide (L) comprend une cuve (30) contenant le liquide (32) et qui comporte deux faces latérales (31, 34) au moins partiellement transparentes au rayonnement lumineux généré par l'émetteur optique ($T_{M\pi E}$) du second équipage pour autoriser respectivement l'entrée du rayonnement dans le liquide (32), et la sortie du rayonnement hors du liquide, après réflexion sous la surface libre (33) de celui-ci, lesdits moyens de guidage optique ($M_1$, $M_2$) étant adaptés pour diriger le rayonnement lumineux provenant de l'émetteur optique ($T_{M\pi E}$) du second équipage perpendiculairement à la face latérale d'entrée (31).

6. Codeur angulaire selon l'une des revendications 1 à 5, caractérisé par le fait que les moyens de guidage optique comprennent un objectif d'entrée ($L_1$) intercalé entre le dispositif formant niveau à liquide (L) et l'émetteur optique ($T_{M\pi E}$) du second équipage optique, cet émetteur étant placé au foyer de l'objectif d'entrée ($L_1$).

7. Codeur angulaire selon l'une des revendications 1 à 6, caractérisé par le fait que les moyens de guidage optique comprennent un objectif de sortie ($L_2$) intercalé entre le dispositif formant niveau à liquide (L) et le récepteur ($T_{M\pi R}$) du second équipage optique, la piste des marques radiales (11) du disque (D) étant coplanaire au plan focal de l'objectif de sortie ($L_2$).

8. Codeur angulaire selon l'une des revendications 1 à 7, caractérisé par le fait que les moyens de guidage optique comprennent des miroirs ($M_1$, $M_2$, $M_3$, $M_4$, $M_5$).

9. Codeur angulaire selon les revendications 7 et 8 prises en combinaison, caractérisé par le fait que le nombre de miroirs ($M_3$, $M_4$) disposés entre le dispositif formant niveau à liquide (L) et l'objectif de sortie ($L_2$) est pair.

10. Codeur angulaire selon l'une des revendications 1 à 9, caractérisé par le fait qu'il comprend un frein (A, C) apte à amortir les oscillations du pendule (P).

11. Codeur angulaire selon la revendication 10, caractérisé par le fait que le frein comporte un élément électriquement conducteur (C), et au moins un générateur de champ magnétique (A), disposés adjacents, l'un sur le pendule (P), l'autre sur un bâti fixe portant le pendule à pivotement.

12. Codeur angulaire selon l'une des revendications 1 à 11, caractérisé par le fait que les moyens de guidage optiques comprennent :
— des premiers moyens de guidage ($M_4$, $M_5$) aptes à diriger le rayonnement lumineux généré par l'émetteur optique $T_{M\pi E}$) du second équipage optique, vers le dispositif formant niveau à liquide (L), selon une incidence sensiblement parallèle au disque (D), et
— des seconds moyens de guidage ($M_3$, $M_4$, $M_5$) et ($L_2$) disposés sur le trajet optique entre le dispositif formant niveau à liquide (L) et le disque (D), aptes à récupérer le rayonnement lumineux en sortie du dispositif formant niveau à liquide (L) et à dévier ce rayonnement en direction de la piste (11) des marques selon une indicence normale au disque (D).

13. Codeur angulaire selon l'une des revendications 1 à 12, caractérisé par le fait que l'un des équipages détecteurs comprend deux ensembles détecteurs ($T_{M\pi E}$, $T_{M\pi R}$ ; $T_{MOE}$, $T_{MOR}$) comportant chacun un dispositif émetteur optique ($T_{M\pi E}$, $T_{MOE}$) et un dispositif récepteur optique ($T_{M\pi R}$ ; $T_{MOR}$) associés, lesdits dispositifs récepteurs ($T_{M\pi R}$ ; $T_{MOR}$) étant sensiblement diamétralement opposés par rapport à l'axe de pivotement relatif (O-O) des équipages, pour compenser le désalignement dudit axe de pivotement relatif (O-O) et de l'axe de référence (R-R) du disque (D).

14. Codeur angulaire selon la revendication 13, caractérisé par le fait que l'équipage optique représentant la verticale, qui est porté par le pendule (P) comporte :
— un ensemble principal comprenant ledit émetteur optique ($T_{M\pi E}$) et ledit récepteur optique ($T_{M\pi R}$) associés, sur le trajet optique desquels est intercalé le dispositif formant niveau à liquide (L), et
— un ensemble auxiliaire, qui comprend un dispositif émetteur optique auxiliaire ($T_{MOE}$) et un dispositif récepteur optique auxiliaire ($T_{MOR}$), ce dernier étant sensiblement diamétralement opposé au récepteur optique ($T_{M\pi R}$) de l'ensemble principal, par rapport à l'axe de pivotement relatif (O-O), et le rayonnement généré par le dispositif émetteur optique auxiliaire ($T_{MOE}$) étant dirigé directement vers le dispositif récepteur optique auxiliaire ($T_{MOR}$) avec la seule interposition du disque (D) sur le trajet optique auxiliaire reliant ces dispositifs.

15. Codeur angulaire selon l'une des revendications 13 ou 14, caractérisé par le fait que les dispositifs récepteurs optiques ($T_{M\pi R}$ ; $T_{MOR}$) de l'ensemble principal et de l'ensemble auxiliaire sont équidistants de l'axe de pivotement relatif (O-O).

16. Codeur angulaire selon les revendications 4, 7 et 12 prises en combinaison avec les revendications 14 et 15, caractérisé par le fait que la focale f de l'objectif de sortie (L₂) répond à la relation :

$$f = R/n \cos \beta, \text{ dans laquelle}$$

R représente la distance séparant l'axe de pivotement relatif (O-O) et le point d'intersection entre le trajet optique et la piste de marques (11) prévue sur le disque (D).

n représente l'indice de réfraction du liquide (32) contenu dans le dispositif formant niveau à liquide (L), et

β représente l'angle du faisceau émergeant de ce dispositif (L), avant déviation par les seconds moyens de guidage (M₅) en direction du disque (D), par rapport à un plan passant par l'axe de pivotement relatif (O-O) et le point d'intersection entre la piste des marques (11) prévue sur le disque (D) et le rayonnement lumineux.

17. Codeur angulaire selon l'une des revendications 1 à 16 prises en combinaison avec la revendication 6, caractérisé par le fait que les moyens de guidage optique (M₃, M₄) sont adaptés pour récupérer le rayonnement lumineux émergeant du dispositif formant niveau à liquide (L) et pour diriger ce rayonnement vers l'objectif de sortie (L₂), selon une incidence concourante à l'axe de pivotement relatif (O-O).

18. Codeur angulaire pour le codage d'angle zénithal entre une direction déterminée variable et la verticale, en particulier pour théodolite, du type comprenant :
— un disque (D) qui comporte au moins une série de marques (11, 12) réparties sur une piste circulaire centrée sur un axe de référence horizontal (R, R)
— un premier (T$_F$) et un second (T$_{M\pi E}$, T$_{M\pi R}$ ; T$_{MOE}$, T$_{MOR}$) équipages détecteurs optiques susceptibles d'un pivotement relatif autour d'un axe coaxial à l'axe de référence (R-R) du disque, qui représentent respectivement, par rapport à l'axe de pivotement relatif, ladite direction déterminée, et la verticale, chacun des équipages détecteurs comportant des moyens émetteurs optiques (14 ; T$_{M\pi E}$, T$_{MOE}$) et des moyens récepteurs optiques (15 ; T$_{M\pi R}$, T$_{MOR}$) associés, placés en regard de la piste des marques (11, 12) pour détecter la présence de celles-ci devant chacun desdits équipages, et
— des moyens de mesure du décalage angulaire entre les équipages détecteurs, qui sont sensibles à la détection des marques par chacun des équipages,
caractérisé en ce qu'il comprend :
— un pendule (P) de faible dimension monté à rotation autour d'un axe horizontal (O-O) au moins sensiblement confondu avec l'axe de référence (R-R) du disque (D) et qui porte le second équipage détecteur (T$_{M\pi E}$, T$_{M\pi R}$ ; T$_{MOE}$, T$_{MOR}$),
— un dispositif formant niveau à liquide (L) solidaire du pendule (P),
— des moyens de guidage optique (M₁, M₂, M₃, M₄, M₅ ; L₁, L₂), solidaires du pendule (P) et adaptés pour guider en rayonnement lumineux généré par un émetteur optique (T$_{M\pi E}$) du second équipage vers un récepteur associé (T$_{M\pi R}$), selon un trajet optique prédéterminé intersectant la piste des marques (11) du disque (D), et sur lequel est intercalé le dispositif formant niveau à liquide (L), les moyens de guidage optique comprenant :
— des premiers moyens de guidage (M₁, M₂) aptes à diriger le rayonnement lumineux généré par l'émetteur optique (T$_{M\pi E}$) du second équipage détecteur selon une incidence parallèle au disque (D), vers
— un objectif d'entrée (L₁) disposé en amont du dispositif formant niveau à liquide (L) sur le trajet optique et au foyer duquel est disposé l'émetteur optique (T$_{M\pi E}$) du second équipage détecteur, de telle sorte que le rayonnement pénètre dans le liquide (32) sous forme d'un faisceau parallèle, par une face latérale d'entrée (31) du dispositif formant niveau à liquide (L), selon une incidence normale à cette face, soit réfléchi sous la surface (33) du liquide et ressorte du liquide, parallèlement au disque (D), par une face latérale de sortie (34) du dispositif formant niveau à liquide (L),
— des moyens de guidage optique auxiliaires (M₃, M₄) aptes à récupérer le rayonnement en sortie du dispositif formant niveau à liquide (L) pour diriger celui-ci, selon une incidence concourante à l'axe de pivotement relatif (O-O) vers
— un objectif de sortie (L₂), et
— des seconds moyens de guidage optique (M₅) disposés entre l'objectif de sortie (L₂) et la piste des marques (11) prévue sur le disque (D), aptes à dévier le rayonnement en direction du disque (D) selon une incidence normale à celui-ci, le plan focal de l'objectif de sortie (L₂) coïncidant avec la piste des marques du disque (D) sur le trajet optique.

19. Codeur angulaire selon la revendication 18, caractérisé par le fait que le second équipage détecteur optique comprend :
— un ensemble principal comprenant ledit émetteur optique (T$_{M\pi E}$) et ledit récepteur optique (T$_{M\pi R}$) associés, sur le trajet optique desquels sont intercalés les moyens de guidage optique (M₁, M₂, M₃, M₄, M₅) et le dispositif formant niveau à liquide (L) et
— un ensemble auxiliaire (T$_{MOE}$, T$_{MOR}$) qui comporte un dispositif émetteur optique auxiliaire (T$_{MOE}$) et un dispositif récepteur optique auxiliaire (T$_{MOR}$).
Ce dernier étant symétrique au récepteur optique (T$_{M\pi R}$) de l'ensemble principal, par rapport à l'axe de pivotement relatif (O-O), le rayonnement généré par le dispositif émetteur optique auxiliaire (T$_{MOE}$) étant dirigé directement vers le dispositif récepteur optique auxiliaire (T$_{MOR}$) avec la seule interposition du disque (D) sur le trajet optique auxiliaire reliant ces dispositifs,
— et la focale f de l'objectif de sortie (L₂) répondant à la relation :

$$f = R/n, \text{ dans laquelle}$$

25　　　　　**0 154 568**　　　　　26

R représente la distance séparant l'axe de pivotement relatif (O-O) et le point d'intersection entre le trajet optique et le trajet en rotation des marques (11) du disque (D),

n représente l'indice de réfraction du milieu (32) contenu dans le dispositif formant niveau à liquide (L).

## Claims

1. An angle encoder for encoding the zenithal angle between a variable determined direction and the vertical, in particular for a theodolite, the encoder being of the type comprising :

— a disk (D) which includes at least one series of marks (11, 12) distributed around a circular track centered on a horizontal reference axis (R-R) ;

— at least one optical detector equipment ($T_{M\pi E}$, $T_{M\pi R}$ ; $T_{MOE}$, $T_{MOR}$) suitable for pivoting about an axis (O-O) which is coaxial with the reference axis (R-R) of the disk and which represents the vertical relative to the pivot axis (O-O), the above-mentioned optical equipment including optical transmitter means ($T_{M\pi E}$, $T_{MOE}$) associated with optical receiver means ($T_{M\pi R}$, $T_{MOR}$) placed facing the said track of marks (11, 12) to detect the marks thereon, and

— measuring means which are sensitive to the detection of the marks (11, 12) by the equipment ($T_{M\pi E}$, $T_{M\pi R}$ ; $T_{MOE}$, $T_{MOR}$, characterised in that it comprises :

— a small pendulum (P) rotatably mounted about a horizontal axis (O-O) which is at least substantially aligned with the reference axis (R-R) of the disk (D) and which carries the optical equipment ($T_{M\pi E}$, $T_{M\pi R}$ ; $T_{MOE}$, $T_{MOR}$),

— optical guidance means ($M_1$, $M_2$, $M_3$, $M_4$, $M_5$) which are fixed to the pendulum (P) and are adapted to guiding light radiation generated by an optical transmitter ($T_{M\pi E}$) of the optical equipment towards an associated receiver ($T_{M\pi R}$) along a predetermined optical path intersecting the said track of marks (11) on the disk (D) ; and

— a liquid level device (L) fixed to the pendulum (P) and interposed on the optical path connecting the said transmitter ($T_{M\pi E}$) and the said associated receiver ($T_{M\pi R}$) of the optical equipment, the level being inserted on the path upstream from its point of intersection with the marks (11) on the disk (D), the said optical guidance means ($M_1$, $M_2$, $M_3$, $M_4$, $M_5$) and the said liquid level device (L) being adapted to ensure an angular deviation of the point of intersection of the light radiation and the track of marks (11) on the disk (D) relative to the pivot axis (O-O) for compensating the angular error between the pendulum (P) and the vertical.

2. An angular encoder according to claim 1, characterised by the fact that it comprises first and second optical detector equipments ($T_F$ ; $T_{M\pi E}$, $T_{M\pi R}$ ; $T_{MOE}$, $T_{MOR}$) suitable for relative pivoting about an axis coaxial with the reference axis of the disk, the first and second optical detector equipments respectively representing, relative to the relative pivot axis (O-O) the said determined direction and the vertical, and the measuring means being sensitive to detection of the marks (11, 12) by each of the equipments to determine the angular shift therebetween.

3. An angle encoder according to one of claims 1 and 2, characterised by the fact that the disk (D) is driven in rotation about the reference axis (R-R) and wherein the marks (11, 12) are radial marks which are angularly spaced about said reference axis (R-R).

4. An angle encoder according to one of claims 1 to 3, characterised by the fact that the optical guidance means ($M_1$-$M_5$) are adapted to introduce the radiation generated by the optical transmitter ($T_{M\pi E}$) of the second optical equipment into the liquid (32) of the liquid level device (L) to ensure refection of the said radiation under the free surface (33) of the liquid.

5. An angle encoder according to claim 4, characterised by the fact that the liquid level forming device (L) comprises a tank (30) containing the liquid (32) and which includes two side faces (31, 34) which are at least partially transparent to the light radiation generated by the optical transmitter ($T_{M\pi E}$) of the second equipment to respectively enable said radiation to enter into the liquid (32) and to enable the radiation to leave the liquid after reflection under the free surface (33) thereof, the said optical guidance means ($M_1$, $M_2$) being adapted to direct the light radiation from the optical transmitter ($T_{M\pi E}$) of the second equipment perpendicularly to the inlet side face (31).

6. An angle encoder according to one of claims 1 to 5, characterised by the fact that the optical guidance means comprise an inlet lens ($L_1$) interposed between the liquid level forming device (L) and the optical transmitter ($T_{M\pi E}$) of the second optical equipment, said transmitter being placed at the focus of the inlet lens ($L_1$).

7. An angle encoder acccording to one of claims 1 to 6, characterised by the fact that the optical guidance means include an outlet lens ($L_2$) interposed between the liquid level forming device (L) and the receiver ($T_{M\pi R}$) of the second optical equipment, the track of radial marks (11) on the disk (D) being coplanar with the focal plane of the outlet lens ($L_2$).

8. An angular encoder according to one of claims 1 to 7, characterised by the fact that the optical guidance means include mirrors ($M_1$, $M_2$, $M_3$, $M_4$, $M_5$).

9. An angular encoder according to claims 7 and 8 taken in combination, characterised by the fact that the number of mirrors ($M_3$, $M_4$) disposed between the liquid level forming device (L) and the outlet lens ($L_2$) is an even number.

10. An angle encoder according to one of claims 1 to 9, characterised by the fact that it comprises a brake (A, C) suitable for damping oscillations of the pendulum (P).

11. An angle encoder according to claim 10,

14

characterised by the fact that the brake comprises an electrically conductive component (C), and at least one magnetic field generator component (A) placed adjacent thereto, one of said components being placed on the pendulum (P) and the other on a fixed frame relative to which the pendulum swings.

12. An angle encoder according to one of claims 1 to 11, characterised by the fact that the optical guidance means include :

— first guidance means ($M_4$, $M_5$) suitable for directing the light radiation generated by the optical transmitter ($T_{M\pi E}$) of the second optical equipment towards the liquid level forming device (L) at an incidence which is substantially parallel to the disk (D) ; and

— second guidance means ($M_3$, $M_4$, $M_5$) ($L_2$) disposed on the optical path between the liquid level forming device (L) and the disk (D), suitable for receiving the light radiation leaving the liquid level forming device (L) and for deviating said radiation towards the track of marks (11) at an incidence normal to the disk (D).

13. An angle encoder according to one of claims 1 to 12, characterised by the fact that the detector equipments include two detector assemblies ($T_{M\pi E}$, $T_{M\pi R}$ ; $T_{MOE}$, $T_{MOR}$) each comprising an optical transmitter device ($T_{M\pi E}$, $T_{MOE}$) associated with an optical receiver device ($T_{M\pi R}$, $T_{MOR}$), the said receiver devices ($T_{M\pi R}$, $T_{MOR}$) being substantially diametrically opposed about the relative pivot axis (O-O) of the equipments, thereby compensating any misalignment of the said relative pivot axis (O-O) and the reference axis (R-R) of the disk (D).

14. An angle encoder according to claim 13, characterised by the fact that the optical equipment representing the vertical which is carried by the pendulum (P) comprises :

— a main assembly comprising the said optical transmitter ($T_{M\pi E}$) and the said associated optical receiver ($T_{M\pi R}$) having the liquid level forming device (L) disposed on the optical path thereof ; and

— an auxiliary assembly which comprises an auxiliary optical transmitter device ($T_{MOE}$) and an auxiliary optical receiver device ($T_{MOR}$),

— said auxiliary optical receiver device being substantially diametrically opposed to the optical receiver device ($T_{M\pi R}$) of the main assembly about the relative pivot axis (O-O) ; and

the radiation generated by the auxiliary optical transmitter ($T_{MOE}$) being directed directly towards the auxiliary optical receiver device ($T_{MOR}$) with only the disk (D) being interposed on the auxiliary optical path interconnecting the auxiliary optical devices.

15. An angle encoder according to one of claims 13 or 14, characterised by the fact that the optical receiver devices ($T_{M\pi R}$, $T_{MOR}$) of the main and auxiliary assemblies are equidistant from the relative pivot axis (O-O).

16. An angle encoder according to claims 14 and 15 taken in combination with claims 4, 7 and 12, characterised by the fact that the focal length f of the outlet lens ($L_2$) is derived from the equation :

$$f = R/(n.\cos \beta), \text{ in which}$$

R represents the distance separating the relative pivot axis (O-O) and the point of intersection between the optical path and the track of marks (11) provided on the disk (D) ;

n represents the refractive index of the liquid (32) contained in the liquid level forming device (L) ; and

$\beta$ represents the angle of the beam emerging from the liquid level forming device (L) prior to deviation by the second guidance means ($M_5$) towards the disk (D) and relative to a plane passing through the relative pivot axis (O-O) and the point of intersection between the track of marks (11) provided on the disk (D) and the light radiation.

17. An angle encoder according to one of claims 1 to 16 taken in combination with claim 6, characterised by the fact that the optical guidance means ($M_3$, $M_4$) are adapted to receive the light radiation emerging from the liquid level forming device (L) and to direct said radiation towards the outlet lens ($L_2$) at an incidence which intersects the relative pivot axis (O-O).

18. An angle encoder for encoding the zenithal angle between a variable determined direction and the vertical, in particular for a theodolite, of the type comprising :

— a disk (D) which includes at least one series of marks (11, 12) distributed on a circular track centered on a horizontal reference axis (R-R),

— first ($T_F$) and second ($T_{M\pi E}$, $T_{M\pi R}$ ; $T_{MOE}$, $T_{MOR}$) optical detector equipments capable of relative pivoting about an axis coaxial with the reference axis (R-R) of the disk, the first and second detector equipments respectively representing, relative to the relative pivot axis, the said determined direction and the vertical, each of the detector equipments including optical transmitter means (14 ; $T_{M\pi E}$, $T_{MOE}$) and associated optical receiver means (15 ; $T_{M\pi R}$, $T_{MOR}$) placed facing the track of marks (11, 12) for detecting the presence thereof in front of each of said equipments ; and

— means for measuring the angular shift between the detector equipments, which means are sensitive to the detection of the marks by each of the equipments ; characterised in that it further comprises :

— a small pendulum (P) mounted to rotate about a horizontal axis (O-O) which is at least substantially coaxial with the reference axis (R-R) of the disk (D) and which carries the second detector equipment ($T_{M\pi E}$, $T_{M\pi R}$ ; $T_{MOE}$, $T_{MOR}$),

— a liquid level forming device (L) fixed to the pendulum (P),

— optical guidance means ($M_1$, $M_2$, $M_3$, $M_4$, $M_5$ ; $L_1$, $L_2$) fixed to the pendulum (P) and adapted to guide light radiation generated by an optical transmitter ($T_{M\pi E}$) of the second equip-

ment towards an associated receiver ($T_{M\pi R}$) along a predetermined optical path intersecting the track of marks (11) on the disk (D), and having the liquid level forming device (L) inserted thereon, the optical guidance means comprising :

— first guidance means ($M_1$, $M_2$) suitable for directing the light radiation generated by the optical transmitter ($T_{M\pi E}$) of the second detector equipment at an incidence parallel to the disk (D) towards,

— an inlet lens ($L_1$) disposed upstream from the liquid level forming device (L) on the optical path and having a focus at which the optical transmitter ($T_{M\pi E}$) of the second detector equipment is disposed such that the radiation penetrating the liquid (32) does so in the form of a parallel beam via an inlet side face (31) of the liquid level forming device (L) at a normal incidence to said face to be reflected under the surface (33) of the liquid and to leave the liquid parallel to the disk (D) via an outlet side face (34) of the liquid level forming device (L),

— auxiliary optical guidance means ($M_3$, $M_4$) suitable for receiving the radiation from the liquid level forming device (L) and to direct it at an incidence which intersects the relative pivot axis (O-O) towards,

— an outlet lens ($L_2$), and

— second optical guidance means ($M_5$) disposed between the outlet lens ($L_2$) and the track of marks (11) provided on the disk (D), suitable for deflecting the radiation towards the disk (D) at an incidence normal thereto, with the focal plane of the outlet lens ($L_2$) coinciding with the track of marks on the disk (D) and on the optical path.

19. An angle encoder according to claim 18, characterised by the fact that the second optical detector equipment comprises :

— a main assembly comprising the said optical transmitter ($T_{M\pi E}$) and the said associated optical receiver ($T_{M\pi R}$) and having the optical guidance means ($M_1$, $M_2$, $M_3$, $M_4$, $M_5$) and the liquid level forming device (L) interposed on their optical path ; and

— an auxiliary assembly ($T_{MOE}$, $T_{MOR}$) which includes an auxiliary optical transmitter device ($T_{MOE}$) and an auxiliary optical receiver device ($T_{MOR}$), said auxiliary optical receiver device being symmetrically disposed to the optical receiver ($T_{M\pi R}$) of the main assembly about the relative pivot axis (O-O), the radiation generated by the auxiliary optical transmitter device ($T_{MOE}$) being directly directed towards the auxiliary optical receiver device ($T_{MOR}$) with only the disk (D) being interposed on the auxiliary optical path between said devices ; and

— the focal length f of the outlet lens ($L_2$) being determined by the equation :

$$f = R/n, \text{ in which}$$

R represents the distance separating the relative pivot axis (O-O) and the point of interception between the optical path and the rotary path of the marks (11) on the disk (D) ; and

n represents the refracted index of the medium (32) contained in the liquid level forming device (L).

**Patentansprüche**

1. Winkelkodierer zum Kodieren von Zenitwinkeln zwischen einer vorbestimmten variablen Richtung und der Vertikalen, insbesondere für Theodoliten, vom Typ mit :

— einer Scheibe (D), die zumindest eine Reihe von Markierungen (11, 12) umfaßt, die auf einer kreisförmigen Bahn verteilt sind, die sich um eine horizontale Referenzachse (R-R) zentriert ist,

— mindestens einer optischen Detektormeßeinrichtung ($T^M_{\pi E}$, $T_{M\pi R}$, $T_{MOE}$, $T_{MOR}$), die um eine Achse (O-O) schwenkbar ist, die koaxial zu der Referenzachse (R-R) der Scheibe angeordnet ist, und die das Vertikal in Bezug auf die Schwenkachse (O-O) darstellt, wobei die vorgenannte optische Meßeinrichtung optische Emittereinrichtungen ($T_{M\pi E}$, $T_{MOE}$) und optische Empfangseinrichtungen umfaßt ($T_{M\pi R}$, $T_{MOR}$), die miteinander verbunden sind und die gegenüber der genannten Bahn von Markierungen (11, 12) angeordnet sind, um die vor dieser sich befindenden Markierungen zu detektieren, und

— Meßeinrichtungen, die zur Detektion der Markierungen (11, 12) durch die Meßeinrichtung ($T_{M\pi E}$, $T_{M\pi R}$ ; $T_{MOE}$, $T_{MOR}$) geeignet sind,

dadurch gekennzeichnet, daß er umfaßt :

— ein Pendel (P) von geringer Ausdehnung, das zur Rotation um eine horizontale Achse (O-O) montiert ist, die zumindest im wesentlichen mit der Referenzachse (R-R) der Scheibe (D) verbunden ist, wobei das Pendel die optische Meßeinrichtung ($T_{M\pi E}$, $T_{M\pi R}$, $T_{MOE}$, $T_{MOR}$) trägt,

— optische Leiteinrichtungen ($M_1$, $M_2$, $M_3$, $M_4$, $M_5$), die mit dem Pendel (P) fest verbunden sind und eingerichtet sind, um von einem optischen Emitter ($T_{M\pi E}$) der optischen Meßeinrichtung erzeugte Lichtstrahlung, zu einem mit ihm verbundenen Empfänger ($T_{M\pi R}$) zu leiten, längs einem vorbestimmten optischen Weg, der die genannte Bahn von Markierungen (11) der Scheibe (D) durchdringt, und

— eine Einrichtung zum Bilden eines Flüssigkeitsstandes (L), die mit dem Pendel (P) fest verbunden und in dem optischen Weg angeordnet ist, der den Emitter ($T_{M\pi E}$) und den Empfänger ($T_{M\pi R}$), die mit der optischen Meßeinrichtung verbunden sind, verbindet, oberhalb des Schnittpunktes zwischen dem optischen Weg und der genannten Bahn von Markierungen (11) der Scheibe (D), wobei die genannten optischen Leiteinrichtungen ($M_1$, $M_2$, $M_3$, $M_4$, $M_5$) und die Einrichtung zum Bilden eines Flüssigkeitsstandes (L) so eingerichtet sind, daß sie ein winkelmäßiges Abweichen des Schnittpunktes der Lichtstrahlung mit der Bahn der Markierungen (11) der Scheibe (D) gewährleistet, in Bezug auf die Schwenkachse (O-O), die den winkelförmigen Abstand zwischen dem Pendel (P) und dem Vertikal ausgleicht.

2. Winkelkodierer nach Anspruch 1, dadurch gekennzeichnet, daß er zwei optische Detektormeßeinrichtungen ($T_F$ ; $T_{M\pi E}$, $T_{M\pi R}$, $T_{MOE}$, $T_{MOR}$) umfaßt, die so eingerichtet sind, daß sie relativ um eine Achse schwenkbar angeordnet sind, die koaxial zu der Referenzachse der Scheibe ist, wobei die erste und die zweite optische Detektormeßeinrichtung jeweils, in Bezug auf die relative Schwenkachse (O-O), die genannte vorbestimmte Richtung und die Vertikale darstellen, und die Meßeinrichtungen zur Detektion der Markierungen (11, 12) durch jede der Meßeinrichtungen geeignet sind, um den Winkelabstand zwischen diesen zu bestimmen.

3. Winkelkodierer nach einem der Ansprüche 1 und 2, dadurch gekennzeichnet, daß die Scheibe (D) in Rotation um die Referenzachse (R-R) gebracht wird, und dadurch, daß die Referenzachse (R-R) gebracht wird, und dadurch, daß die radialen Markierungen (11, 12) mit Winkelabständen in Bezug auf diese Referenzachse (R-R) angeordnet sind.

4. Winkelkodierer nach einem der Ansprüche 1 bis 3, dadurch gekennzeichnet, daß die optischen Leiteinrichtungen ($M_1$-$M_5$) so eingerichtet sind, daß sie die vom optischen Emitter ($T_{M\pi E}$) der zweiten optischen Meßeinrichtung `erzeugte Strahlung in die Flüssigkeit (32) der Einrichtung zum Bilden eines Flüssigkeitsstandes (L) einführt, um eine Reflexion der genannten Strahlung unter der freien Oberfläche (33) der Flüssigkeit zu gewährleisten.

5. Winkelkodierer nach Anspruch 4, dadurch gekennzeichnet, daß die Einrichtung zum Bilden eines Flüssigkeitsstandes (L) ein Gefäß (30) umfaßt, das die Flüssigkeit (32) beinhaltet und das zwei Seitenflächen (31, 34) umfaßt, die zumindest teilweise für die vom optischen Emitter ($T_{M\pi E}$) der zweiten Meßeinrichtung erzeugte Lichtstrahlung transparent sind, um den Eintritt der Strahlung in die Flüssigkeit (32) bzw. den Austritt der Strahlung aus der Flüssigkeit, nach ihrer Reflexion unter der freien Oberflächen (33) der Flüssigkeit, zu ermöglichen, wobei die gennanten optischen Leiteinrichtungen ($M_1$, $M_2$) so eingerichtet sind, daß sie die Lichtstrahlung aus dem optischen Emitter ($T_{M\pi E}$) der zweiten Meßeinrichtung senkrecht zur seitlichen Eintrittsfläche (31) lenken.

6. Winkelkodierer nach einem der Ansprüche 1 bis 5, dadurch gekennzeichnet, daß die optischen Leiteinrichtungen ein Eintrittsobjektiv ($L_1$) umfassen, das zwischen der Einrichtung zum Bilden eines Flüssigkeitsstandes (L) und dem optischen Emitter ($T_{M\pi E}$) der zweiten optischen Meßeinrichtung eingeschoben ist, wobei sich dieser Emitter im Brennpunkt des Eintrittsobjektivs ($L_1$) befindet.

7. Winkelkodierer nach einem der Ansprüche 1 bis 6, dadurch gekennzeichnet, daß die optischen Leiteinrichtungen ein Austrittsobjektiv ($L_2$) umfassen, das zwischen der Einrichtung zum Bilden eines Flüssigkeitsstandes (L) und dem Empfänger ($T_{M\pi R}$) der zweiten optischen Meßeinrichtung eingeschoben ist, wobei die Bahn der radialen Markierungen (11) der Scheibe (D) koplanar mit der Brennpunktebene des Austrittsobjektivs ($L_2$) ist.

8. Winkelkodierer nach einem der Ansprüche 1 bis 7, dadurch gekennzeichnet, daß die optischen Leiteinrichtungen Spiegel ($M_1$, $M_2$, $M_3$, $M_4$, $M_5$) umfassen.

9. Winkelkodierer nach Anspruch 7 kombiniert mit Anspruch 8, dadurch gekennzeichnet, daß die Zahl der Spiegel ($M_3$, $M_4$), die zwischen der Einrichtung zum Bilden eines Flüssigkeitsstandes (L) und dem Austrittsobjektiv ($L_2$) angeordnet sind, gerade ist.

10. Winkelkodierer nach einem der Ansprüche 1 bis 9, dadurch gekennzeichet, daß er eine Bremse (A, C) umfaßt, die geeignet ist, Schwingungen des Pendels (P) zu dämpfen.

11. Winkelkodierer nach Anspruch 10, dadurch gekennzeichnet, daß die Bremse ein elektrischen leitendes Element (C), und zumindest einen Magnetfelderzeuger (A) umfaßt, die nebeneinanderliegend angeordnet sind, das eine auf dem Pendel (P), der andere auf einem festen Gerüst, das das Pendel schwenkbar trägt.

12. Winkelkodierer nach einem der Ansprüche 1 bis 11, dadurch gekennzeichnet, daß die optischen Leiteinrichtungen umfassen :
— erste Leiteinrichtungen ($M_4$, $M_5$), die geeignet sind, den von dem optischen Emitter ($T_{M\pi E}$) der zweiten optischen Meßeinrichtung erzeugte Lichtstrahlung zu der Einrichtung zum Bilden eines Flüssigkeitsstandes (L) zu lenken, nach einem Einfall, der im wesentlichen parallel zur Scheibe (D) verläuft, und
— zweite Leiteinrichtungen ($M_3$, $M_4$, $M_5$) ($L_2$), die auf dem optischen Weg zwischen der Einrichtung zum Bilden eines Flüssigkeitsstandes (L) und der Scheibe (D) angeordnet, und die geeignet sind, die Lichtstrahlung beim Austritt aus der Einrichtung zum Bilden eines Flüssigkeitsstandes (L) wieder einzufangen und diese Strahlung in Richtung der Bahn (11) der Markierungen abzulenken, längs einem normalen Einfall auf die Scheibe (D).

13. Winkelkodierer nach einem der Ansprüche 1 bis 12, dadurch gekennzeichnet, daß eine der Detektormeßeinrichtungen zwei Gruppen von Detektoren ($T_{M\pi E}$, $T_{M\pi R}$ ; $T_{MOE}$, $T_{MOR}$) umfaßt, die jede eine optische Emittereinrichtung ($T_{M\pi E}$, $T_{MOE}$) und eine optische Empfangseinrichtung ($T_{M\pi R}$, $T_{MOR}$) umfassen, die miteinander verbunden sind, wobei die genannten Empfangseinrichtungen ($T_{M\pi R}$ ; $T_{MOR}$) in Bezug auf die relative Schwenkachse (0-0) der Meßeinrichtungen im wesentlichen diametral entgegengesetzt sind, um das Fluchtabweichen der genannten relativen Schwenkachse (0-0) und der Referenzachse (R-R) der Scheibe (D) auszugleichen.

14. Winkelkodierer nach Anspruche 13, dadurch gekennzeichnet, daß die Vertikale darstellende optische Meßeinrichtung, die von dem Pendel (P) getragen wird, umfaßt :
— eine Hauptgruppe mit dem genannten optischen Emitter ($T_{M\pi E}$) und dem genannten optischen Empfänger ($T_{M\pi R}$), die miteinander ver-

bunden sind, in deren optischen Weg eine Einrichtung zum Bilden eines Flüssigkeitsstandes (L) eingebracht ist, und

— eine Hilfsgruppe, die eine optische Hilfsemittereinrichtung ($T_{MOE}$) und eine optische Hilsempfangseinrichtung ($T_{MOR}$) umfaßt, wobei diese letztere im wesentlichen diametral entgegengesetzt zum optischen Empfänger ($T_{M\pi R}$) der Hauptgruppe ist, in Bezug auf die relative Schwenkachse (0-0), und die von der optischen Hilfsemittereinrichtung ($T_{MOE}$) erzeugte Strahlung direkt zu der optischen Hilfsempfängereinrichtung ($T_{MOR}$) gelenkt wird, allein durch Interposition der Scheibe (D) in den optischen Hilfsweg, der diese Einrichtungen verbindet.

15. Winkelkodierer nach einem der Ansprüche 13 oder 14, dadurch gekennzeichnet, daß die optischen Empfängereinrichtungen ($T_{M\pi R}$ ; $T_{MOR}$) der Hauptgruppe und der Hilfsgruppe zur relativen Schwenkachse (0-0) gleichen Abstand haben.

16. Winkelkodierer nach den Ansprüchen 4, 7 und 12 in Kombination mit den Ansprüchen 14 und 15, dadurch gekennzeichnet, daß der Brennpunkt f des Austrittsobjektivs ($L_2$) der Gleichung entspricht :

f = R/n cos β, bei der

R den Abstand darstellt, der die relative Schwenkachse (0-0) von dem Schnittpunkt zwischen dem optischen Weg und der Markierungsbahn (11), die auf der Scheibe (D) vorgesehen ist, trennt.

n den Brechungsindex der Flüssigkeit (32), die in der Einrichtung zum Bilden eines Flüssigkeitsstandes (L) enthalten ist, darstellt, und

β den Winkel des Bündels, das aus dieser Anordnung (L) austritt, vor Ablenkung durch die zweiten Leiteinrichtungen ($M_5$) in Richtung der Scheibe (D), in Bezug auf eine Ebene darstellt, die hindurchgeht durch die relative Schwenkachse (0-0) und den Schnittpunkt zwischen der Markierungsbahn (11), die auf der Scheibe (D) vorgesehen ist, und der Lichtstrahlung.

17. Winkelkodierer nach einem der Ansprüche 1 bis 16 in Kombination mit Anspruch 6, dadurch gekennzeichnet, daß die optischen Leiteinrichtungen ($M_3$, $M_4$) eingerichtet sind, die Lichtstrahlung, die aus der Einrichtung zum Bilden eines Flüssigkeitsstandes (L) austritt, wieder einzufangen, und diese Strahlung zu dem Austrittsobjektiv ($L_2$) zu lenken, längs einem Einfall, der mit der relativen Schwenkachse (0-0) gleichläuft.

18. Winkelkodierer zum Kodieren von Zenitwinkeln zwischen einer vorbestimmten variablen Richtung und dem Vertikal, insbesondere für Theodoliten, vom Typ mit :

— einer Scheibe (D), die zumindest eine Reihe von Markierungen (11, 12) umfaßt, die auf einer kreisförmigen Bahn verteilt sind, die sich um eine horizontale Referenzachse (R, R) zentriert ist,

— ersten ($T_F$) und zweiten ($T_{M\pi E}$, $T_{M\pi R}$ ; $T_{MOE}$, $T_{MOR}$) optischen Detektormeßeinrichtungen, die relativ um eine Achse schwenkbar sind, die zu der Referenzachse (R-R) der Scheibe koaxial ist, die jeweils, in Bezug auf die relative Schwenkachse, die genannte vorbestimmte Richtung und die Vertikale darstellen, wobei jede dieser Detektormeßeinrichtungen optische Emittereinrichtungen (14 ; $T_{M\pi E}$, $T_{MOE}$) und optische Empfangseinrichtungen (15 ; $T_{M\pi R}$, $T_{MOR}$) umfaßt, die miteinander verbunden sind und die gegenüber der Markierungsbahn (11, 12) angeordnet sind, um das Vorhandensein der Markierungen vor jeder der Einrichtungen zu detektieren, und

— Einrichtungen zum Messen des Winkelabstands zwischen den Detektormeßeinrichtungen, die die Markierungen durch jede der Meßeinrichtungen detektieren können, dadurch gekennzeichnet, daß er umfaßt :

— ein Pendel (P) von kleiner Ausdehnung, das um eine horizontale Achse (0-0) rotierbar montiert ist, die zumindest im wesentlichen mit der Referenzachse (R-R) der Scheibe (D) verbunden ist, wobei das Pendel die zweite Detektormeßeinrichtung ($T_{M\pi E}$, $T_{M\pi R}$ ; $T_{MOE}$, $T_{MOR}$) trägt,

— eine Einrichtung zum Bilden eines Flüssigkeitsstandes (L), die mit dem Pendel (P) fest verbunden ist,

— optische Leiteinrichtungen ($M_1$, $M_2$, $M_3$, $M_4$, $M_5$ ; $L_1$, $L_2$), die mit dem Pendel (P) fest verbunden sind, und so eingerichtet sind, daß sie Lichtstrahlung, die von einem optischen Emitter ($T_{M\pi E}$) der zweiten Meßeinrichtung erzeugt wurde, zu einem Empfänger ($T_{M\pi R}$) leiten, der mit diesem verbunden ist, längs einem vorbestimmten optischen Weg, der die Markierungsbahn (11) der Scheibe (D) unterteilt, und auf dem die Einrichtung zum Bilden eines Flüssigkeitsstandes (L) eingeschoben ist, wobei die optischen Leiteinrichtungen umfassen :

— erste Leiteinrichtungen ($M_1$, $M_2$), die geeignet sind, die von dem optischen Emitter ($T_{M\pi E}$) der zweiten Detektormeßeinrichtung erzeugte Lichtstrahlung längs einem Einfall parallel zur Scheibe (D) zu lenken, zu

— einem Eintrittsobjektiv ($L_1$), das oberhalb der Einrichtung zum Bilden eines Flüssigkeitsstandes (L) auf dem optischen Weg angeordnet ist, auf dessen optischem Weg und im Brennpunkt desselben der optische Emitter ($T_{M\pi E}$) der zweiten Detektormeßeinrichtung angebracht ist, so daß die Strahlung in die Flüssigkeit (32) eindringt in Form eines parallelen Bündels, durch eine seitliche Eintrittsfläche (31) der Einrichtung zum Bilden eines Flüssigkeitsstandes (L), längs einem normalen Einfall an dieser Seite, sei es, daß sie unter der Oberfläche (33) der Flüssigkeit reflektiert wird und wieder aus der Flüssigkeit austritt, parallel zur Scheibe (D), durch eine seitliche Austrittsfläche (34) der Einrichtung zum Bilden eines Flüssigkeitsstandes (L),

— optische Hilfsleitungseinrichtungen ($M_3$, $M_4$), die geeignet sind, die aus der Einrichtung zum Bilden eines Flüssigkeitsstandes (L) austretende Strahlung einzufangen, um diese, nach einem Einfall, der mit der relativen Schwenkachse (0-0) gleichläuft, zu lenken, zu

— einem Austrittsobjektiv (L₂), und

— zweite optischer Leiteinrichtungen (M₅), die zwischen dem Austrittsobjektiv (L₂) und der Markierungsbahn (11) auf der Scheibe (D) vorgesehen sind, die geeignet sind, die Strahlung in Richtung der Scheibe (D) abzulenken längs einem Einfall, der zu dieser normal ist, wobei die Brennebene des Austrittsobjektivs (L₂) sich deckt mit der Markierungsbahn der Scheibe (D) auf dem optischen Weg.

19. Winkelkodierer nach Anspruch 13, dadurch gekennzeichnet, daß die zweite optische Detektormeßeinrichtung umfaßt :

— eine Hauptgruppe mit dem genannten optischen Emitter ($T_{MπE}$) und dem genannten optischen Empfänger ($TM_{πR}$), die miteinander verbunden sind, auf deren optischem Weg die optischen Leiteinrichtungen (M₁, M₂, M₃, M₄, M₅) und die Einrichtung zum Bilden eines Flüssigkeitsstandes (L) eingebracht sind, und

— eine Hilfsgruppe ($T_{MOE}$, $T_{MOR}$), die eine optische Hilfsemittereinrichtung ($T_{MOE}$) und eine optische Hilsempfängereinrichtung ($T_{MOR}$) umfaßt,

— wobei letztere symmetrisch zum optischen Empfänger ($T_{MπR}$) der Hautgruppe angeordnet ist, in Bezug auf die relative Schwenkachse (0-0), die von der optischen Hilfsemittereinrichtung ($T_{MOE}$) erzeugte Strahlung direkt in Richtung der optischen Hilsempfängereinrichtung ($T_{MOR}$) gelenkt wird, nur mit Dazwischentreten der Scheibe (D) auf dem optischen Hilfsweg, der diese Einrichtungen verbindet,

— und die Brennweite f des Austrittsobjektivs (L₂) dem Verhältnis entspricht :

f = R/n, bei der

R den Abstand darstellt, der die relative Schwenkachse (0-0) von dem Schnittpunkt zwischen dem optischen Weg und dem Rotationsweg der Markierungen (11) der Scheibe (D) trennt,

n den Brechungsindex des Mittels (32) darstellt, das in der Einrichtung zum Bilden eines Flüssigkeitsstandes (L) enthalten ist.

19

FIG_1

FIG.2

0 154 568

$T_{M\pi R}$

51

D

50

$L_2$

48

47

49

$M_5$

45

$M_4$

$T_{MOR}$

$T_{MOE}$

FIG.3

39

$T_{M\pi E}$

$M_1$

40

41

43

42

$M_2$

FIG.4

0 154 568